# EUROPÄISCHE PATENTSCHRIFT

(11) **EP 1 691 274 B1**
(45) Veröffentlichungstag und Bekanntmachung des Hinweises auf die Patenterteilung: **02.06.2010**
(21) Anmeldenummer: 05002654.1
(22) Anmeldetag: 09.02.2005
(51) Int. Cl.: G06F 9/44

(54) **Verfahren und Vorrichtung zum rechnergestützten Erzeugen einer graphischen Benutzeroberfläche auf einem Anzeigemittel**
Method and apparatus for computer-assisted creation of a graphical user interface on a display device
Procédé et appareil pour créer une interface graphique utilisateur assistée par ordinateur sur un appareil d'affichage

(43) Veröffentlichungstag der Anmeldung: 16.08.2006
(73) Patentinhaber: Deutsche Post AG, 53113 Bonn (DE)
(72) Erfinder: Kranz, Jürgen, 50374 Erftstadt (DE); Westerweller, Jörg, 51570 Windeck/Rosbach (DE)
(74) Vertreter: Jostarndt, Hans-Dieter

(56) Entgegenhaltungen:
- HARMONIA INC: "White Paper: The UIML Vision"[Online] 1. Februar 2000 (2000-02-01), Seiten 1-7, XP002348737 Gefunden im Internet: URL:http://defense.harmonia.com/resources/ papers/whitepapers/UIMLVisionWhitePaperV5. pdf> [gefunden am 2005-09-30]
- PFISTERER CHRISTOPH: "A Semantic Description Language for Platform-Independent Graphical User Interfaces"[Online] 2003, XP002348223 STUTTGART Gefunden im Internet: URL:http://elib.uni-stuttgart.de/opus/voll texte/2003/1314/pdf/DIP-2017.pdf> [gefunden am 2005-09-30]
- ECKHARDT V.: "Software Architecture and Development for Infotainment and Telematics systems"[Online] April 2003 (2003-04), Seiten 1-7, XP002348744 Gefunden im Internet: URL:http://lag.lineas.de/www/pics/presse_f presse/2003_04_Software_Infotainmentsystem e_LINEAS_VDA_TK.pdf> [gefunden am 2005-09-30]

## Beschreibung

Die Erfindung betrifft ein Verfahren zum rechnergestützten Erzeugen einer graphischen Benutzeroberfläche auf einem Anzeigemittel, wobei die Benutzeroberfläche zur Interaktion eines Benutzers mit einem Anwendungsprogramm dient und das Anwendungsprogramm auf einem Computermittel installiert ist, das in Verbindung mit dem Anzeigemittel steht und das Anwendungsprogramm Zugriff auf wenigstens ein Vorgangsbearbeitungsmodul hat.

Die Erfindung betrifft ferner eine Vorrichtung zur Durchführung des Verfahrens und ein computerlesbares Medium, das Befehle zum Ausführen des Verfahrens auf einem Computermittel aufweist.

Bei Anwendungsprogrammen, welche auf Computermitteln installiert und ausgeführt werden, ist es bekannt, graphische Benutzerschnittstellen einzusetzen, um eine vereinfachte Interaktion eines Benutzers mit dem Anwendungsprogramm zu ermöglichen. Derartige Benutzeroberflächen werden auch als Graphical User Interface (GUI) bezeichnet. Benutzeroberflächen von Anwendungsprogrammen erfüllen zum einen die Funktion, dass Elemente und Informationen auf einem Bildschirm angezeigt werden. Zum anderen müssen sie die Ausführung von Aktionen ermöglichen, welche von dem Benutzer an der Benutzeroberfläche initiiert werden. Wird eine Benutzeroberfläche beispielsweise in einem Retailsystem in Form eines Filial- oder Automatensystems eingesetzt, in welchem verschiedene Transaktionen durchgeführt werden können, wird durch die Ansteuerung von Elementen oder die Eingabe von Werten auf der Benutzeroberfläche die Durchführung der Transaktionen gesteuert. Üblicherweise enthalten Anwendungsprogramme dazu programmierte GUI-Funktionen, welche den Ablauf und die Ansteuerung der einzelnen GUI-Elemente festlegen und Kernfunktionen, welche die Abwicklung der Transaktionen mit dem Anwendungsprogramm betreffen.

Die meisten Anwendungsprogramme sind so gestaltet, dass sie mit einer definierten Benutzeroberfläche betrieben werden. Zur Interaktion der Benutzeroberfläche mit einem Anwender können dabei verschiedene Anzeigemittel wie Computermonitore, Automatendisplays, Displays von Mobiltelefonen oder Websites zur Anwendung kommen. Dabei stellt sich das Problem, dass definierte Benutzeroberflächen oftmals nicht für jegliche Formen von Anzeigemitteln verwendet werden können, da die Art der Darstellung beispielsweise nicht für alle Größen oder Auflösungen von Anzeigemitteln geeignet ist. Beispielsweise kann eine bestimmte Maske oder ein Maskenablaufplan für einen Benutzer auf einem Computermonitor gut darstellbar sein, während die gleiche Maske auf einem weitaus kleineren Automatendisplay nicht zufrieden stellend dargestellt werden kann.

Das Problem unterschiedlicher Anzeigemittel für ein Anwendungsprogramm ist beispielsweise aus der US-Patentanmeldung US 2003/0067489 Al bekannt, in welcher eine skalierbare Benutzeroberfläche für heterogene Anzeigemittel offenbart ist. Zu den Anzeigemitteln zählen insbesondere Mobiltelefone, PDAs (Personal Digital Assistants), Computer, Notebooks oder Pager. Das System sieht vor, dass das Layout mehrerer Plattform-unabhängiger GUI-Masken dynamisch angepasst wird, so dass sie in den Bildschirm des betreffenden Anzeigemittels passen. Erkennt das System, dass eine GUI-Maske nicht in den Bildschirm passt, sie jedoch auf mehrere Seiten aufteilbar ist, wird die GUI-Maske vom System auf mehrere Seiten verteilt dargestellt.

Aus der US-Patentanmeldung US 2003/0067485 A1 ist ferner ein System mit skalierbaren Benutzeroberflächen bekannt, mit dem der laufende Status einer Anwendung von einem ersten Anzeigemittel auf ein zweites Anzeigemittel übertragen werden kann. Bei den Anzeigemitteln handelt es sich ebenfalls um Mobiltelefone, PDAs (Personal Digital Assistants), Computer, Notebooks oder Pager. Das offenbarte Verfahren sieht vor, ein Update des laufenden Status eines ersten Plattform-unabhängigen Präsentationsmodells mit dem aktuellen Status einer Plattformspezifischen Präsentation zu erstellen, wobei die spezifische Präsentation auf einem ersten Anzeigemittel betrieben werden kann. Ferner wird eine zweite Plattform-spezifische Präsentation erstellt, welche auf einem zweiten Anzeigemittel betrieben werden kann, wobei die Präsentation aus dem Plattform-unabhängigen Präsentationsmodell als Funktion der Eigenschaften der Benutzeroberfläche des zweiten Anzeigemittels erzeugt wird. Daraufhin wird der laufende Status von dem ersten auf das zweite Anzeigemittel übertragen.

Ferner sind Verfahren und Anordnungen zur Erzeugung von dynamischen Benutzeroberflächen bekannt, bei denen eine Anwendung auf unterschiedlichen Geräten wie Computern, Handhelds, Mobiltelefonen oder Pagern eines Nutzers so angezeigt werden kann, dass das Format und die Inhalte der Benutzeroberfläche an das jeweilige Gerät angepasst sind. Beispielsweise wird die Benutzeroberfläche auch an die Auflösung des jeweiligen Geräts angepasst. Zur Realisierung von solchen dynamischen Benutzeroberflächen wird üblicherweise für jedes mögliche Gerät und jede mögliche Darstellungsform eine eigene Beschreibung für die Benutzeroberfläche erzeugt und hinterlegt wird. Für vier verschiedene Geräte mit jeweils drei unterschiedlichen Anwendungen (z.B. Sprache, Organisation, Erfahrung und Rolle des Benutzers) müssen dabei 12 Benutzeroberflächen (UI-Definition) erzeugt werden. Andere Lösungen sehen vor, dass nur 3 UI-Definitionen und 4 Style Sheets erzeugt werden. Soll eine neue Anwendung ergänzt werden, muss nur eine weitere UI-Definition hinzugefügt werden, egal wie viele neue Geräte hinzukommen.

Die Benutzeroberfläche wird dabei nicht in Standardprogrammen geschrieben, sondern mit UIML (User Interface Markup Language). Um die verschiedenen Benutzeroberflächen auf dem jeweiligen Gerät nutzbar zu machen, werden sie auf einem Interface Server hinterlegt. Der Interface Server kombiniert die UI-Definition, das Style Sheet und Inhalt einer Datenbank zu einer UIML Instanz. Ein UIML Renderer mappt die UIML Instanz in eine beliebige Sprache und API. Der Renderer kann auf dem Anzeigegerät oder dem Interface Server betrieben werden.

Darüber hinaus sind semantische Sprachen für Plattformunabhängige graphische Benutzeroberflächen bekannt. Dabei wird im Wesentlichen ein Toolkit zur Erzeugung von Benutzeroberflächen vorgesehen, die unabhängig von der Plattform sind, auf der sie betrieben werden sollen. Ein generisches Kommunikationsmodell erlaubt die Netzwerktransparenz und Unabhängigkeit von einer bestimmten Programmiersprache. Eine XML-basierte Beschreibungssprache reduziert den Kodierungsaufwand und erlaubt die Erstellung von interaktiven Dialog-Editoren. Die Sprache enthält auch semantische Elemente, die über die Struktur hinaus auch das Verhalten der Benutzeroberfläche spezifizieren.

Um Systeme bereitzustellen, welche möglichst einfach erweiterbar oder veränderbar sind, ist es ferner bekannt, derartige Systeme modular auszubilden. Bei den Modulen handelt es sich um standardisierte Komponenten, welche von mehreren anderen Komponenten verwendet werden können. Vorzugsweise können neue Komponenten nach dem "Plug&Play"-Prinzip angeschlossen werden, ohne dass das gesamte System angepasst werden muss.

Um neue Vorgänge in bestehende Retailsysteme integrieren zu können, so dass diese an graphischen Benutzeroberflächen darstellbar und mit einem Anwendungsprogramm durchführbar sind, müssen neue Komponenten in das bestehende System integriert werden. Bei Retailsystemen im Bereich des Versicherungs-, Finanz- und Logistikwesens müssen beispielsweise neue Vorgänge wie die Eröffnung eines Bankkontos, der Abschluss eines Versicherungsvertrages, der Verkauf eines Tickets oder die Einlieferung eines Versandpaketes abgebildet werden. Dies erfordert insbesondere die Erzeugung einer entsprechenden Benutzeroberfläche zur Interaktion eines Benutzers mit dem Anwendungsprogramm, wobei zu beachten ist, dass in einem Retailsystem ebenfalls unterschiedliche Vorrichtungen zur Darstellung der Benutzeroberfläche verwendet werden können.

Aufgabe der Erfindung ist es daher, ein Verfahren zum Erzeugen einer graphischen Benutzeroberfläche auf unterschiedlichen Anzeigemitteln bereitzustellen, bei dem die Benutzeroberfläche an die Eigenschaften des jeweiligen Anzeigemittels anpassbar ist. Dabei soll berücksichtigt werden, dass das Verfahren auf einfache Weise die modulartige Erweiterung eines Gesamtsystems ermöglicht, in welchem mehrere Vorgänge eines Retailsystems abgebildet werden.

Aufgabe der Erfindung ist es ferner, eine Vorrichtung zur Durchführung des Verfahrens bereitzustellen.

Erfindungsgemäß wird diese Aufgabe durch ein Verfahren mit den Merkmalen des unabhängigen Anspruchs 1 gelöst. Vorteilhafte Weiterbildungen des Verfahrens ergeben sich aus den Unteransprüchen 2-5. Die Aufgabe wird ferner durch eine Vorrichtung nach Anspruch 6 gelöst. Eine vorteilhafte Ausführungsform der Vorrichtung ergibt sich aus dem Unteranspruch 7. Anspruch 8 gibt ein computerlesbares Medium zur Durchführung des Verfahrens an.

Das erfindungsgemäße Verfahren zum rechnergestützten Erzeugen einer graphischen Benutzeroberfläche auf einem Anzeigemittel, wobei die Benutzeroberfläche zur Interaktion eines Benutzers mit einem Anwendungsprogramm dient, sieht vor, dass ein Anwendungsprogramm auf einem Computermittel installiert ist, das in Verbindung mit dem Anzeigemittel steht, und dass das Anwendungsprogramm Zugriff auf wenigstens ein Vorgangsbearbeitungsmodul hat. Bei einem Vorgangsbearbeitungsmodul handelt es sich um eine Einheit, welche einen Vorgang oder eine Transaktion eines Gesamtsystems abbildet. Dabei können sowohl abgeschlossene Vorgänge mit einem eindeutigen Anfang und einem eindeutigen Ende als auch offene Vorgänge als Transaktion bezeichnet werden.

Das Verfahren sieht die Zuordnung eines ersten Maskenablaufplanes aus wenigstens einem Maskenarbeitsbereich zu einem ersten Vorgangsbearbeitungsmodul und die Zuordnung dieses ersten Vorgangsbearbeitungsmoduls zu einem ersten Anzeigemittel vor, wobei das erste Anzeigemittel mit einer ersten Identifikation ID1 gekennzeichnet ist. Ferner wird ein zweiter Maskenablaufplan aus wenigstens einem Maskenarbeitsbereich einem zweiten Vorgangsbearbeitungsmodul zugeordnet und dieses zweite Vorgangsbearbeitungsmodul einem zweiten Anzeigemittel zugeordnet, wobei das zweite Anzeigemittel mit einer zweiten Identifikation ID2 gekennzeichnet ist. Die beiden Vorgangsbearbeitungsmodule werden dabei vorzugsweise mit einer identischen Funktionseinheit versehen. Die Zuordnung eines Maskenablaufplanes zu einem Vorgangsbearbeitungsmodul erfolgt dabei vorzugsweise über die Zuordnung einer spezifischen Konfigurationsdatei, welche beim Start eines Vorgangsbearbeitungsmoduls eingelesen wird.

Das Anwendungsprogramm wird auf dem Computermittel gestartet, wobei die Identifikation ID des damit verbundenen Anzeigemittels eingelesen wird. Dies erfolgt vorzugsweise über das Einlesen eines Arbeitsplatztyps aus einer Datenquelle. Bei der Datenquelle kann es sich beispielsweise um eine Datenbank oder eine Datei handeln. In einem besonders bevorzugten Ausführungsbeispiel der Erfindung wird der Arbeitsplatztyp aus der MSDE (Microsoft Database Engine) des Computermittels ausgelesen. Nach Einlesen der ID erfolgt ein Vergleich der Identifikation ID des Anzeigemittels mit den Identifikationen ID1 und ID2 der vorhandenen Vorgangsbearbeitungsmodule und eine Ermittlung des Vorgangsbearbeitungsmoduls mit einem zugeordneten Anzeigemittel mit der Identifikation ID. Stimmt die Identifikation eines Vorgangsbearbeitungsmoduls mit der eingelesenen ID überein, werden das betreffende Vorgangsbearbeitungsmodul bzw. die Vorgangsbearbeitungsmodule als aktivierbare Vorgangsbearbeitungsmodule des Anwendungsprogrammes festgelegt. Beim Start eines der Vorgangsbearbeitungsmodule werden der jeweilige Maskenablaufplan eingelesen und die zugeordneten Maskenarbeitsbereiche auf der graphischen Benutzeroberfläche dargestellt.

Ein Vorgangsbearbeitungsmodul wird vorzugsweise durch ein Startmodul des Gesamtsystems gestartet, wobei beim Starten wenigstens ein Controller, eine Funktionseinheit und ein Datencontainer des Vorgangsbearbeitungsmoduls initialisiert werden. Ferner wird eine Controller-Konfigurationsdatei zur Initialisierung des Controllers eingelesen, wobei die Controller-Konfigurationsdatei die Konfiguration der Darstellung des Maskenablaufplanes des betreffenden Vorgangsbearbeitungsmoduls beinhaltet. Darüber hinaus wird eine Datencontainer-Konfigurationsdatei zur Initialisierung des Datencontainers eingelesen, wobei die Datencontainer-Konfigurationsdatei die Konfiguration der Datenobjekte des Datencontainers des betreffenden Vorgangsbearbeitungsmoduls und die Konfiguration der Operationen für die Kommunikation zwischen dem Maskenarbeitsbereich, der Funktionseinheit und dem Datencontainer beinhaltet. Die Controller-Konfigurationsdatei und/oder die Datencontainer-Konfigurationsdatei werden vorzugsweise im XML-Format bereitgestellt.

Durch den Controller wird eine Darstellungskomponente initialisiert und der erste Maskenarbeitsbereich des Vorgangsbearbeitungsmoduls ermittelt und initialisiert. Die Steuerelemente des Maskenarbeitsbereiches werden auf der graphischen Benutzeroberfläche dargestellt, wobei der Maskenarbeitsbereich über die Darstellungskomponente auf die Datenobjekte des Datencontainers zugreift.

Bei der Festlegung des Vorgangsbearbeitungsmoduls mit einem zugeordneten Anzeigemittel mit der Identifikation ID als aktivierbares Vorgangsbearbeitungsmodul des Anwendungsprogrammes kann ein Steuerelement für das betreffende Vorgangsbearbeitungsmodul auf der graphischen Benutzeroberfläche angezeigt werden, und der Start des Vorgangsbearbeitungsmoduls wird durch eine Betätigung des Steuerelementes durch einen Benutzer ausgelöst.

Die Erfindung umfasst ferner eine Vorrichtung mit Mitteln zur Durchführung des beschriebenen Verfahrens zum rechnergestützten Erzeugen einer graphischen Benutzeroberfläche.

Die Erfindung umfasst ferner ein computerlesbares Medium, das Befehle zum Ausführen der Schritte des erfindungsgemäßen Verfahrens auf einem Computermittel aufweist.

Das erfindungsgemäße Verfahren zum rechnergestützten Erzeugen einer graphischen Benutzeroberfläche auf einem Anzeigemittel hat zusammen mit der zugehörigen Vorrichtung den Vorteil, dass für jedes Anzeigemittel eines Gesamtsystems aus mehreren Komponenten ein optimierter Maskenablaufplan und geeignete Einzelmasken zur Verfügung gestellt werden können. Dabei können insbesondere verschiedene Bildschirmgrößen und -auflösungen berücksichtigt werden. Eine automatische Anpassung an verschiedene Anzeigemittel, welche beispielsweise zu ungewollten Seitenumbrüchen führen kann, wird so vermieden. Wird das System um ein weiteres Anzeigemittel ergänzt, wird ein entsprechendes neues Vorgangsbearbeitungsmodul bereitgestellt, welches über eine eigene Konfigurationsdatei einen neuen Maskenablaufplan abbildet, welcher auf das neue Anzeigemittel abgestimmt ist. Das System ist somit flexibel um jegliche Anzeigemittel erweiterbar, ohne dass wesentliche Funktionen verändert und mit großem Aufwand programmtechnisch realisiert werden müssen.

Ferner ermöglicht die Trennung zwischen den Steuerungselementen der Benutzeroberfläche und dem Programmcode bzw. dem Datencontainer den Austausch von GUI-Elementen. Wird beispielsweise ein Textfeld in eine Schaltfläche (Button) umgewandelt, kann dies durch eine Änderung der Datencontainer-Konfigurationsdatei erfolgen, ohne dass die Maskenarbeitsbereiche umprogrammiert werden müssen. Dies gilt ebenso für die Änderung von Vorgaben für Textfelder. Soll beispielsweise die zugelassene Zeichenlänge eines Feldes verändert werden, ist dazu ebenfalls lediglich eine Veränderung der Datencontainer-Konfigurationsdatei erforderlich.

Die Modularstruktur des Gesamtsystems ermöglicht somit die Veränderung und Ergänzung von Vorgangsbearbeitungsmodulen, wobei durchzuführende Transaktionen stets auf allen verfügbaren Anzeigemitteln durchführbar sind.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt
- Fig. 1: ein besonders bevorzugtes Ausführungsbeispiel eines Vorgangsbearbeitungsmoduls mit einem Maskenablaufplan aus mehreren Maskenarbeitsbereichen; und
- Fig. 2: eine schematische Darstellung eines besonders bevorzugten Ausführungsbeispiels der erfindungsgemäßen Zuordnung von Maskenablaufplänen zu mehreren Vorgangsbearbeitungsmodulen.

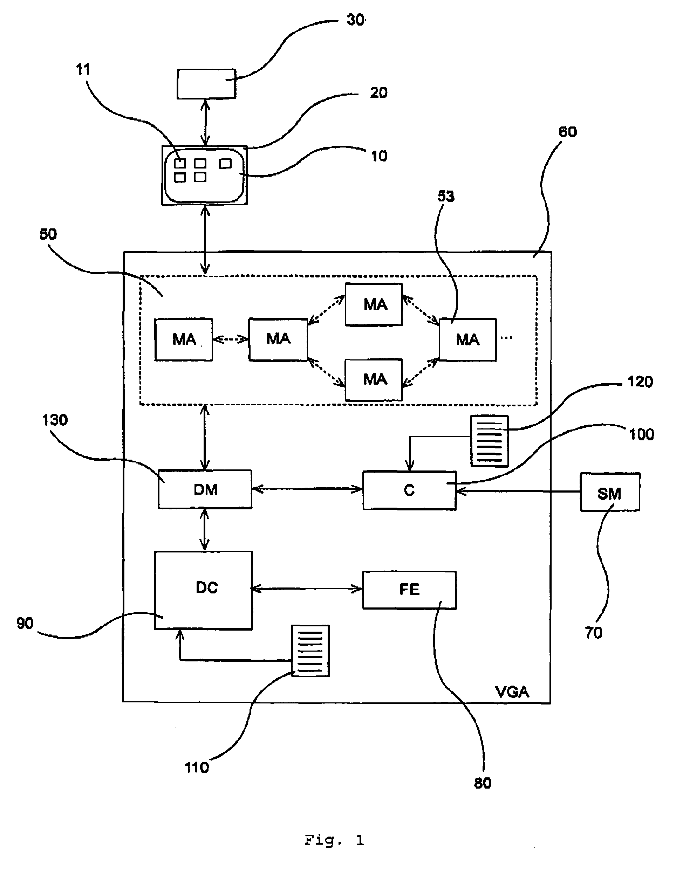

Anhand der Fig. 1 soll die vorteilhafte Verwendung von Vorgangsbearbeitungsmodulen in einem Gesamtsystem aus mehreren Komponenten beschrieben werden. In Fig. 1 ist dazu schematisch ein besonders bevorzugtes Ausführungsbeispiel eines Vorgangsbearbeitungsmoduls 60 mit einem Maskenablaufplan 50 aus mehreren Maskenarbeitsbereichen 53 dargestellt. Ein Vorgangsbearbeitungsmodul wird im Folgenden auch mit VGA bezeichnet. Das Vorgangsbearbeitungsmodul bildet elektronisch einen Vorgang oder Geschäftsprozess ab, welcher von dem Vorgangsbearbeitungsmodul abgewickelt wird. Bei den Vorgängen handelt es sich beispielsweise um Transaktionen innerhalb eines Retailsystems, welche im Bereich des Finanz-, Versicherungs- und Logistikwesens eingesetzt werden. Unter Transaktionen können neben Vorgängen mit einem eindeutigen Anfang und einem eindeutigen Ende, die entweder vollständig oder gar nicht ausgeführt werden, auch statusunabhängige Abfragen verstanden werden. Das Vorgangsbearbeitungsmodul dient insbesondere zur Sammlung aller erforderlichen Daten für einen Vorgang.

Das Vorgangsbearbeitungsmodul 60 ist auf einem Computermittel 40 installiert, das in Verbindung mit einem Anzeigemittel 20 steht. Auf dem Anzeigemittel ist eine graphische Benutzeroberfläche 10 darstellbar. Bei dem Anzeigemittel kann es sich beispielsweise um einen Computermonitor, ein Automatendisplay, das Display eines Mobiltelefons oder eine Website handeln.

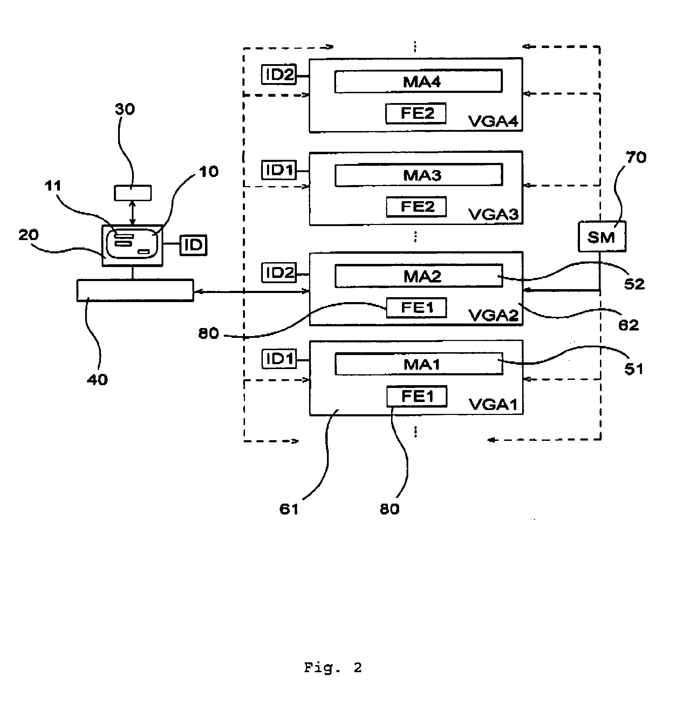

Auf dem Computermittel sind vorzugsweise mehrere Vorgangsbearbeitungsmodule installiert. Dies ist schematisch in Fig. 2 dargestellt, in welcher vier von mehreren Vorgangsbearbeitungsmodulen mit VGA1, VGA2, VGA3 und VGA4 bezeichnet sind. Die Vorgangsbearbeitungsmodule können sich dabei im Frontend oder im Backend eines Gesamtsystems aus mehreren Komponenten befinden. Unter dem Frontend ist in diesem Zusammenhang beispielsweise der Bereich eines Clients zu verstehen, während der Bereich einer Serverapplikation oder weiterer Umsysteme als Backend bezeichnet wird. Vorzugsweise ist das VGA im Frontend angeordnet und bei einem durch das Modul abgebildeten Vorgang handelt es sich beispielsweise um eine Transaktion, die von einem Benutzer 30 an einer graphischen Benutzeroberfläche 10 in Verbindung mit dem jeweiligen Vorgangsbearbeitungsmodul abgewickelt wird. Der Benutzer kann beispielsweise ein Mitarbeiter in einer Filiale sein, welcher den Vorgang für einen Kunden durchführt. Der Benutzer kann ferner der Kunde selbst sein, welcher an einem Automaten eine Transaktion tätigt.

Vorzugsweise handelt es sich bei dem Gesamtsystem, in welches die Vorgangsbearbeitungsmodule integriert sind, um ein stark modulares System, in welchem die Vorgänge bis auf kleinste Funktionseinheiten unterbrochen sind. Daher kann ein Vorgangsbearbeitungsmodul auch einen Prozess abbilden, welcher Bestandteil mehrerer anderer Vorgangsbearbeitungsmodule ist. Beispielsweise kann ein VGA das Einscannen eines Barcodes, die Erfassung von Kundendaten oder die Berechnung eines Wertes abbilden. Diese Einzelprozesse können als Module von anderen Vorgangsbearbeitungsmodulen aufgerufen werden, so dass sie nur einmalig implementiert werden müssen. Für jedes Vorgangsbearbeitungsmodul und damit für jeden Vorgang wird eine Benutzeroberfläche bereitgestellt, wobei der modulare Aufbau den Vorteil hat, dass bei einer Veränderung des jeweiligen Einzelprozesses die Benutzeroberfläche ebenfalls nur einmalig in dem betreffenden Vorgangsbearbeitungsmodul verändert werden muss.

Das Vorgangsbearbeitungsmodul 60 steht über das verwendete Computermittel und ein Anzeigemittel 20 in Verbindung mit der graphischen Benutzeroberfläche 10, die mehrere Steuerelemente 11 aufweist. Bei den Steuerelementen handelt es sich beispielsweise um Schaltflächen oder Eingabefelder, die eigene Funktionalitäten wie beispielsweise Einfeld- oder Mehrfeldplausibilitäten enthalten können. Die Benutzeroberfläche 10 befindet sich in Form eines Anwendungsrahmens vorzugsweise auf einem Client, bei dem es sich um eine Anwendung in einem Netzwerk handelt, welche die Dienste eines oder mehrerer Server in Anspruch nimmt. Der Client initialisiert beim Start den Anwendungsrahmen der graphischen Benutzeroberfläche. Der Client kann dabei eine Plattform mit weiteren Komponenten eines Frameworks wie Datenbanken, Abrechnungsmodule, etc. nutzen. In einem besonders bevorzugten Ausführungsbeispiel der Erfindung kann eine als CARBON(Component ARchitecture for **B**usiness **O**ptimizatio**N**)-Plattform bezeichnete Plattform genutzt werden, welche als Software realisiert und auf Datenverarbeitungsanlagen installiert ist. Das Framework beinhaltet dabei die Laufzeitbibliothek der Plattform, welche auch als Common Language Runtime bezeichnet wird (CLR). Nach der Initialisierung des Anwendungsrahmens durch den Client initialisiert und startet dieser zweckmäßigerweise den Kern des Frameworks. Vor der Initialisierung des Kerns können Prüfungen durchgeführt werden, welche beispielsweise die Integrität des Programms betreffen. Ferner kann überprüft werden, ob es sich um einen Start oder einen Recovery-Fall handelt, welcher durch einen Abbruch eines Vorganges erzeugt wurde.

Das Vorgangsbearbeitungsmodul 60 befindet sich vorzugsweise ebenfalls auf dem Client. Dabei können auf dem Client mehrere verschiedene Versionen eines Vorgangsbearbeitungsmoduls installiert sein. Beim Starten des Vorgangsbearbeitungsmoduls wird automatisch die Version mit der höchsten Versionsnummer herangezogen. Um dies zu ermöglichen, sind die Vorgangsbearbeitungsmodule zweckmäßigerweise in einer bestimmten Weise in einem Vorgangsbearbeitungsmodul-Verzeichnis abgelegt.

Die graphische Benutzeroberfläche (GUI) ist vorzugsweise als Assistent-basiertes System konzipiert, bei dem von einem Anwender 30 im Laufe eines Vorganges mehrere Masken in einer vorgegebenen Reihenfolge abgearbeitet werden. Dies hat den Vorteil, dass für einen Vorgang benötigte Daten vollständig erfasst werden und ferner sichergestellt ist, dass der Anwender beim Abschluss des Vorganges alle möglichen Optionen zu Gesicht bekommen hat.

In einem bevorzugten Ausführungsbeispiel der Erfindung ist das Vorgangsbearbeitungsmodul ebenfalls an ein Framework angeschlossen, das vorzugsweise objektorientiert und komponentenorientiert ausgebildet ist. Bei dem Framework handelt es sich um ein API (Application Programming Interface), welches die Funktionalitäten bereitstellt, Clients für verschiedene Assistent-basierte Vorgangsarten zu erstellen. Die von dem Framework zur Verfügung gestellten Funktionalitäten umfassen beispielsweise Kernfunktionalitäten wie das Starten/Beenden des Clients oder der Vorgangsbearbeitungsmodule. Das Framework stellt beispielsweise ein gemeinsames Startmodul 70 zum Starten der Vorgangsbearbeitungsmodule bereit. Ferner unterstützt das Framework die Vorgangsbearbeitungsmodule bei der Datenhaltung und Ablaufsteuerung und stellt Komponenten für den Zugriff auf Daten oder zum Drucken bereit. Darüber hinaus werden Basisfunktionalitäten wie die Protokollierung oder die Fehlerbehandlung bereitgestellt.

Als vollständig objektorientierte Programmiersprache innerhalb des Frameworks kann beispielsweise C# verwendet werden. Die objektorientierte Programmierung sieht Objekt-Klasse-Beziehungen vor, wobei eine Klasse ein abstrakter Oberbegriff für Objekte ist, die eine gemeinsame Struktur und/oder ein gemeinsames Verhalten aufweisen. Ein Objekt ist dabei ein zur Laufzeit eines Programmes vorhandenes Exemplar einer Klasse, für das Speicherplatz zur Verfügung gestellt wird. Ein Objekt ist eine Instanz einer Klasse. Eine Klasse und damit ihre Objekte werden durch Attribute, Operationen, Zusicherungen und Beziehungen charakterisiert, wobei die Klassen die Attribute und Methoden zu einer Einheit zusammenfassen. Die Attribute sind standardmäßig nur über Methoden der Klasse zugänglich, so dass eine Kapselung oder Zugriffsbeschränkung vorliegt. Eine Klasse kann ferner keine, eine oder mehrere explizite Schnittstellen besitzen, und die Kapselung trennt die Implementierung von der Schnittstelle.

In einem besonders bevorzugten Ausführungsbeispiel der Erfindung ist das Vorgangsbearbeitungsmodul 60 kein eigenständiges Programm, sondern benötigt zu seiner Ausführung die Infrastruktur eines Clients. Es handelt sich jedoch um eine aktive Komponente, welche beispielsweise das eigene Pausieren und/der den Start anderer Vorgangsbearbeitungsmodule bewirken kann.

Das Vorgangsbearbeitungsmodul 60 weist verschiedene Komponenten auf, welche vorzugsweise unabhängig oder abhängig von der Benutzeroberfläche 10 ausgeführt sind. Die Steuerung der Benutzeroberfläche ist dabei vorzugsweise unabhängig von Einheiten ausgeführt, welche die fachliche Funktionalität des Vorgangs abbilden und steuern. Ferner können einzelne Bereiche im Frontend auf dem Client angeordnet sein, während sich andere Bereiche im Backend, das heißt auf einer zentralen Serverapplikation oder in einem Umsystem befinden können.

Die zu einem Vorgangsbearbeitungsmodul gehörende Funktionseinheit 80 ist vorzugsweise unabhängig von der graphischen Benutzeroberfläche 10 ausgebildet. In dieser Funktionseinheit befinden sich somit keine Definitionen und Navigationen von Masken, da sonst bei einer Veränderung der Benutzeroberfläche eine Anpassung der Funktionseinheit erfolgen müsste. Ferner hat die Funktionseinheit keinen Zugriff auf GUI-abhängige Instanzen. Werden von dem Vorgangsbearbeitungsmodul Benutzeroberflächen beispielsweise in Form von Web-Frontends unterstützt, kennt der zugehörige Server den Client nur solange, bis eine Anfrage des Clients beantwortet ist. Die Funktionseinheit würde in diesem Fall zweckmäßigerweise im Backend betrieben.

Die Funktionseinheit 80 liegt in einem besonders bevorzugten Ausführungsbeispiel der Erfindung als gekapseltes *BusinessObjekt* vor. Ein Vorgangsbearbeitungsmodul ist dabei genau einem logischen *BusinessObjekt* zugeordnet, das wiederum aus mehreren Klassen mit Verweisen auf Komponenten bestehen kann. Die Aufgabe der Funktionseinheit 80 liegt in der Bereitstellung der fachlichen Funktionalität zur Durchführung eines Vorganges. Durch Aktionen eines Benutzers 30 an der graphischen Benutzeroberfläche 10 wird das *BusinessObjekt* angesprochen. Bei der Aktion an der Benutzeroberfläche kann es sich beispielsweise um das Aktivieren einer Schaltfläche oder die Änderung eines Wertes in einem Feld handeln. Dabei dienen Operationen als Bindeglied zwischen der Funktionseinheit 80 und den GUI-Controls 11 der Benutzeroberfläche 10. Als Operationen werden dabei Commands wie beispielsweise NavigationCommands, GenericCommands oder VGAStartCommands bezeichnet.

Vorzugsweise werden nicht alle Operationen eines Vorgangsbearbeitungsmoduls in einer Klasse implementiert. Im Sinne einer objektorientierten Kapselung verschiedener Aktionen in Klassen hat es sich als vorteilhaft erwiesen, jede Operation in einer eigenen Klasse zu implementieren. Als Ausnahme können jedoch logisch gleiche Aktionen angesehen werden. Beispielsweise kann der Anwender beim Drücken eines "Weiter"-und des "Cancel"-Buttons gefragt werden, ob diese Aktion wirklich durchgeführt werden soll. In diesem Fall handelt es sich tatsächlich um eine gleiche Aktion, die in einer gemeinsamen Klasse, jedoch mit unterschiedlichen Operationsnamen zum Einsatz kommt.

Das VGA weist ferner einen Datencontainer 90 auf. Der Datencontainer ist vorzugsweise ebenfalls unabhängig von der Benutzeroberfläche 10 ausgebildet. Der Datencontainer ist vorzugsweise nach dem Siting-Prinzip einer Container-Site Architektur ausgebildet, wodurch eine einfache Entwicklung ermöglicht wird und Weiterentwicklungen unterstützt werden. Der Datencontainer bildet dabei eine abstrakte generische Schnittstelle von dem Vorgangsbearbeitungsmodul zu Kernkomponenten des Frameworks. Das Framework kommuniziert vorzugsweise über ein Interface *IVGAEntrypoint* mit dem Datencontainer.

Der Datencontainer 90 ist die zentrale Sammelstelle von Daten innerhalb eines Vorgangsbearbeitungsmoduls und ist somit für die Speicherung des Zustandes des VGA zuständig. Alle relevanten Daten, die in dem VGA anfallen, werden im Datencontainer abgelegt. Dabei kann es sich um von einem Benutzer eingegebene oder vom System ermittelte Daten handeln. Die Daten werden hierbei in Form von Datenobjekten abgelegt, d.h. jedes Datenelement ist einem Datenobjekt zugehörig und kann nur über dieses gelesen, geschrieben und geändert werden. Es hat sich als besonders vorteilhaft erwiesen, jedem Vorgangsbearbeitungsmodul 60 einen eigenen Datencontainer 90 zuzuweisen. Dies hat gegenüber der Verwendung einer allgemeinen Datenbank für alle Vorgangsbearbeitungsmodule den Vorteil, dass verschiedene Zusatzfunktionen durchgeführt werden können. Beispielsweise ist beim Abbruch eines Vorgangsbearbeitungsmoduls ein einfacher Neustart in dem Zustand möglich, in welchem der Abbruch stattfand. Da der Zustand des Vorgangsbearbeitungsmoduls vollständig im Datencontainer abgebildet ist, kann der Zustand beim Neustart rekonstruiert und weitergeführt werden, wobei lediglich ein geringer Datenbestandteil gespeichert und rekonstruiert werden muss.

Welche Datenobjekte im Datencontainer 90 existieren und mit welchen Werten diese gefüllt sind, wird erfindungsgemäß in einer Datencontainer-Konfigurationsdatei 110 angegeben. Diese Datei liegt im Verzeichnis des VGA und entspricht einem definierten Schema. Bei der Konfigurationsdatei handelt es sich vorzugsweise um eine Datei im XML-Format (Extensible Markup Language). Beim Instanziieren des Datencontainers wird diese Datei geladen, die konfigurierten Datenobjekte werden erstellt und mit den angegebenen Start-Werten initialisiert. Die konfigurierten Datenobjekte stehen dann zur Verfügung und können zum einen an ein Steuerelement 11 der graphischen Benutzeroberfläche 10 gebunden und/oder durch die im *BusinessObjekt* definierte Programmlogik gelesen, geschrieben und geändert werden. Ist der Datencontainer instanziiert, wird diese Instanz dem Konstruktor des *BusinessObjekts* übergeben. Dadurch kann das *BusinessObjekt* auf die Datenobjekte des Datencontainers zugreifen. Der Datencontainer existiert jedoch prinzipiell unabhängig vom *BusinessObjekt*, da dieses erzeugt und wieder vernichtet werden kann.

Ein wesentlicher Bestandteil eines Vorgangsbearbeitungsmoduls 60 ist ferner wenigstens ein Maskenarbeitsbereich 53, der abhängig von der Benutzeroberfläche ausgebildet ist. Beinhaltet ein Vorgangsbearbeitungsmodul einen Maskenablaufplan 50 aus mehreren Masken, die nacheinander durchlaufen werden, liegen mehrere Maskenarbeitsbereiche 53 vor. In der Fig. 1 ist beispielhaft ein nicht-linearer Maskenablaufplan 50 mit fünf Maskenarbeitsbereichen 53 dargestellt. Die Maskenarbeitsbereiche 53 werden im Folgenden auch als VGA-Workspaces bezeichnet, wobei ein Workspace ein technisches Synonym für eine Maske darstellt. Ein VGA-Workspace bildet das Fundament der Steuerelemente 11 (GUI-Controls) der Benutzeroberfläche 10. Bei einem VGA-Workspace handelt es sich um ein spezielles Interface zur Unterstützung der Kommunikation zwischen den Steuerelementen 11 und einer Darstellungskomponente 130, wobei die Darstellungskomponente wiederum in Verbindung mit dem Datencontainer 90 bzw. der Funktionseinheit 80 steht. Wird ein Vorgang eines Vorgangsbearbeitungsmoduls über die Benutzeroberfläche 10 abgewickelt, beinhaltet dies einen Maskenfluss mit verschiedenen Masken, wobei jede Maske durch einen VGA-Workspace beschrieben ist. Jede Maske wird von einer Klasse implementiert, die vom VGA-Workspace ableitet. Wird ein Maskenfluss für ein Vorgangsbearbeitungsmodul programmiert, werden die Eigenschaften dieser Klasse entsprechend der Fachlogik eingestellt.

Die Verbindung zwischen den Maskenarbeitsbereichen 53 und der Funktionseinheit 80 bzw. dem Datencontainer 90 wird durch eine Darstellungskomponente 130 hergestellt. Die Darstellungskomponente ist dazu als Zwischenschicht zwischen der Funktionseinheit bzw. dem Datencontainer und den VGA-Workspaces ausgebildet. Die Darstellungskomponente wird im Folgenden auch als Presenter bezeichnet. Der Presenter dient der Kommunikation zwischen den Steuerelementen 11 der aktuellen Maske und den zugehörigen Datenobjekten des Datencontainers. Der Presenter stellt ferner eine Infrastruktur für die Ausführung von Operationen der Funktionseinheit bereit.

Zu einem Vorgangsbearbeitungsmodul gehören vorzugsweise mindestens drei Dateien. Bei der ersten Datei handelt es sich beispielsweise um ein Assembly *VGAxxxx.d11* des Vorgangsartenmoduls, in welchem die gesamte Vorgangsbearbeitungslogik kodiert sein kann. Das Assembly muss jedoch zumindest die zum Start eines Vorgangsbearbeitungsmoduls notwendigen Klassen implementieren. Bei der zweiten Datei *FormFlow.config* handelt es sich um die Controller-Konfigurationsdatei 120, welche die Konfiguration für die Operationen und den Maskenablaufplan des Vorgangsbearbeitungsmoduls beinhaltet. Bei der dritten Datei *DataContainer.config* handelt es sich um die Datencontainer-Konfigurationsdatei 110, welche die Konfiguration für die von dem Vorgangsbearbeitungsmodul verwendeten Daten und deren Startwerte enthält.

Die Kommunikation zwischen den Schichten erfolgt in einem bevorzugten Ausführungsbeispiel der Erfindung über Datenobjekte. Vorzugsweise besitzen alle GUI-Controls 11 die Eigenschaften *NameAspect* und *ValueAspect.* Die *NameAspect-*Eigenschaft verweist hierbei auf das namensgebende Datenobjekt, während die ValueAspect-Eigenschaft auf das wertgebende Datenobjekt verweist. Je nach Control werden ein oder zwei Datenobjekte eingebunden. Wird nur ein Datenobjekt eingebunden, wird automatisch die jeweils andere Eigenschaft auf denselben Eigenschaftswert gesetzt. Ferner können jedoch auch standardmäßige GUI-Controls ohne zugeordnete Datenobjekte verwendet werden.

Das Attributieren der Methoden im *BusinessObjekt* findet mittels Klassen statt. Das Attributieren der Methoden im *BusinessObjekt* ermöglicht die Unabhängigkeit der Namen dieser Methoden von den Namen der Datenobjekte bzw. der Operationen. Eine attributierte Methode kann zu mehreren Datenobjekten oder Operationen aufgerufen werden. Die Konstruktoren der Attribute-Klassen können als Parameter konstante Werte entgegennehmen. Der Presenter ruft bei der Validierung - der Reaktion auf eine Änderung eines Datenobjektes und dem Ausführen einer Operation - jeweils eine zentrale virtuelle Methode am BusinessObjekt auf.

Ein VGA-Workspace verwaltet eine Liste der auf seiner Maske angeordneten GUI-Controls und der jeweils zugeordneten Datenobjekte des Datencontainers 90. Ein Datenobjekt repräsentiert einen Wert, der im Datencontainer gehalten wird, sowie einige ergänzende Parameter. Einem Steuerelement 11, das einen bestimmten Wert darstellen soll, wird zum Designzeitpunkt daher nur das entsprechende Datenobjekt des Datencontainers zugewiesen. Zur Laufzeit des Systems wird aufgrund dieses Datenobjektes eine Beziehung des GUI-Controls zu dem darzustellenden Datenobjekt hergestellt, das im Datencontainer gehalten wird. Ändert sich innerhalb des *BusinessObjekts* ein Wert, der auf der Benutzeroberfläche dargestellt werden soll, dann wird das betreffende Datenobjekt, das den Wert enthält, über den Presenter an die VGA-Maske weitergeleitet. Dies gilt ebenso für alle GUI-Controls, welche dieses Datenobjekt darstellen.

Eine andere Form der oben genannten Kommunikation findet statt, wenn durch eine Benutzereingabe eine Wertänderung auf der Benutzeroberfläche stattgefunden hat. In diesem Fall muss das durch die Eingabe aktualisierte GUI-Control den neuen Wert vorzugsweise nach einer internen Plausibilitätsprüfung an das *BusinessObjekt* propagieren. Nach erfolgreicher Validierung auf der Operationen- und dann auf der Funktionseinheits-Ebene wird der neue Wert im betreffenden Datenobjekt des Datencontainers gespeichert.

Die Funktionseinheit hat vorzugsweise keine Kenntnis von den Steuerelementen und hat folglich auch keine unmittelbare Kontrolle über die Objekte der Benutzeroberfläche. Gleichermaßen wirken Änderungen von Feldinhalten in den Steuerelementen nicht unmittelbar auf die Funktionseinheit. Die Funktionseinheit ist vorzugsweise frei von einem bestimmten Status, da sich der Status eines Vorgangsbearbeitungsmoduls in den konkreten Werten der Datenobjekte im Datencontainer widerspiegelt. Die Ausführung der Funktionseinheit ohne Status hat insbesondere den Vorteil, dass die Funktionseinheit dadurch flexibel im Frontend oder im Backend eines Gesamtsystems angeordnet werden kann.

Bei einer Änderung eines Wertes innerhalb der Funktionseinheit, wobei der Wert auf der Benutzeroberfläche dargestellt wird, wird das zugeordnete Datenobjekt, das den Wert enthält, über die Darstellungskomponente an den Maskenarbeitsbereich und alle Steuerungselemente weitergeleitet, welche den Wert darstellen. Dabei erhält die Funktionseinheit die Kontrolle, was es ihr ermöglicht, Berechnungen, Dateizugriffe, etc. durchzuführen. Insbesondere kann die Funktionseinheit ein laufendes Vorgangsbearbeitungsmodul pausieren und ein neues Vorgangsbearbeitungsmodul starten.

Bei einer Änderung eines Wertes auf der Benutzeroberfläche leitet das entsprechende Steuerelement den Wert an die Funktionseinheit und den Datencontainer weiter, wobei der Wert zu dem Datenobjekt gespeichert wird, welches dem Steuerelement zugeordnet ist. Die Funktionseinheit manipuliert die Datenobjekte und das Steuerelement stellt den konkreten aktuellen Inhalt und Zustand des Datenobjektes dar, nachdem die Kontrolle von der Funktionseinheit wieder an den Maskenarbeitsbereich übergegangen ist.

Die Prüfung eingegebener Werte erfolgt nicht auf der GUI-Ebene, sondern vorzugsweise im Bereich des Datencontainers. Beispielsweise ist es für die GUI-Controls und die VGA-Workspaces nicht erforderlich, dass diese eine Überprüfung von Eingabewerten -beispielsweise auf die Zeichenlänge oder einen Datumsbereich- beinhalten. Darf ein Eingabewert beispielsweise nur eine Länge von 15 Zeichen haben, wird dies nicht durch die GUI-Control überprüft, sondern der Wert wird dem entsprechenden Datenobjekt im Datencontainer zugeordnet. Anhand der Eigenschaften des Datenobjektes wird überprüft, ob der Wert die durch den Datencontainer gesetzte Voraussetzung von 15 Zeichen erfüllt oder nicht. Ist dies der Fall, wird der Wert angenommen und im Datencontainer gespeichert. Wird die Voraussetzung nicht erfüllt, erfolgt eine Meldung an den Benutzer 30. Die Trennung der GUI-Controls von der Funktionseinheit und dem Datencontainer hat hierbei den Vorteil, dass die GUI-Controls und damit die Benutzeroberfläche nicht umprogrammiert werden müssen, falls sich beispielsweise die Voraussetzungen für einen Eingabewert ändern sollen. In diesem Fall wird lediglich die Datencontainer-Konfigurationsdatei 110 *DataContainer.config* geändert, mit welcher der Datencontainer initiiert und instanziiert wird.

Das Vorgangsbearbeitungsmodul 60 kann vorzugsweise auf mehrere Arten gestartet werden. Beispielsweise kann der Start über einen Menü-Button auf der Benutzeroberfläche oder aus einem anderen Vorgangsbearbeitungsmodul heraus gestartet werden. Für den Start eines Vorgangsbearbeitungsmoduls ist ein Startmodul 70 zuständig. Das Startmodul kann auch als *ContextManager* bezeichnet werden, der Teil eines *ApplicationManagers* des Frameworks ist. Der Start wird vorzugsweise durch eine Klasse VGABase unterstützt, welche alle Funktionalitäten zum Starten eines Vorgangsbearbeitungsmoduls beinhaltet. Die Klasse *VgaBase* stellt eine abstrakte Basisklasse für alle Datencontainer-Klassen dar. Sie implementiert insbesondere die *IVGAEntryPoint*-Schnittstelle.

Beim Start eines VGA instanziiert und initialisiert das Startmodul 70 den Datencontainer 90 und die Funktionseinheit 80 des betreffenden Vorgangsbearbeitungsmoduls. Ferner wird ein Controller 100 instanziiert, initialisiert und gestartet. Der Controller wird dabei von der Klasse VGABase erzeugt und initialisiert. Der Controller 100 hat die Aufgabe, die Abfolge der verschiedenen VGA-Workspaces 53 eines Maskenablaufplanes 50 zu steuern. Der Controller sorgt ferner dafür, dass ein Vorgangsbearbeitungsmodul korrekt gestartet und beendet wird und dass die jeweils richtigen VGA-Workspaces angezeigt werden.

Beim Initialisieren des Datencontainers 90 werden die Datenobjekte angelegt und mit den Start-Werten initialisiert, welche aus einer Datencontainer-Konfigurationsdatei 110 *DataContainer.config* ausgelesen werden. Die Datencontainer-Konfigurationsdatei 110 enthält die Konfiguration der von dem Vorgangsbearbeitungsmodul verwendeten Daten und deren Startwerte. Beim Initialisieren des Controllers 100 wird ein Maskenablaufplan des Vorgangsbearbeitungsmoduls 60 erstellt. Dazu liest der Controller die Konfiguration des Maskenflusses aus einer Controller-Konfigurationsdatei 120 *FormFlow.config* aus. Dazu kann eine Klasse *FormFlowReader* verwendet werden, welche den Maskenablaufplan des Vorgangsbearbeitungsmoduls aus der *FormFlow.config* ausliest. Die Klasse *FormFlowReader* wird beim Start eines VGA vom Controller aufgerufen. Die Controller-Konfigurationsdatei 120 beinhaltet neben der Konfiguration des Maskenablaufplanes auch die Operationen des Vorgangsbearbeitungsmoduls.

Die Controller-Konfigurationsdatei 120 liegt vorzugsweise im XML-Format vor und enthält Informationen über den Maskenablaufplan 50 eines Vorgangsbearbeitungsmoduls sowie über die zu dem jeweiligen Vorgangsbearbeitungsmodul gehörenden Operationen. Die Konfiguration wird gegen ein Schema validiert, und bei erfolgreicher Validierung erstellt der Controller den Maskenablaufplan. Daraufhin erzeugt der Controller eine Darstellungskomponente 130 und initialisiert diese. Bei jedem Maskenwechsel wird die Darstellungskomponente vom Controller neu initialisiert. Ferner ermittelt der Controller den ersten VGA-Workspace in der Maskenreihenfolge 50, initialisiert diesen und zeigt ihn an. Der Controller verwendet für die Maskennavigation einen Stapel, der beim Start eines Vorgangsbearbeitungsmoduls erzeugt wird. Die Maske des ersten VGA-Workspaces wird als erste auf den Stapel gelegt. Falls ein Vorgangsbearbeitungsmodul auf der letzten Maske gestartet werden soll, werden alle Masken auf den Stapel gelegt, so dass die letzte Maske zur obersten Maske auf dem Stapel wird. Der VGA-Workspace 53 initialisiert daraufhin die Steuerelemente 11 auf seiner Oberfläche, wobei er über die Darstellungskomponente 130 auf die Werte in den zugeordneten Datenobjekten des Datencontainers 90 zugreift.

Bei der Initialisierung geht der VGA-Workspace alle auf seiner Oberfläche angeordneten GUI-Controls durch und ermittelt für jedes Control mit Hilfe der Eigenschaft *AspectName,* welchem Datenobjekt es zugeordnet ist. Anschließend ruft der VGA-Workspace den aktuellen Wert jedes einzelnen Datenobjektes über den Presenter ab. Dies geschieht beispielsweise über eine Methode *GetAspect()* am Presenter, der der Datenobjektname als Parameter übergeben wird. Daraufhin delegiert der Presenter den Methodenaufruf an das *BusinessObjekt,* welches das entsprechende Datenobjekt aus dem Datencontainer abruft.

Ist für ein Vorgangsbearbeitungsmodul 60 ein linearer Maskenfluss vorgesehen, kann das VGA auf der ersten oder der letzten Maske gestartet werden. Ist ein nicht-linearer Maskenfluss vorgesehen, wie es beispielhaft in der Fig. 1 mit fünf Maskenarbeitsbereichen dargestellt ist, wird das VGA standardmäßig auf der ersten Maske gestartet, da im nichtlinearen Maskenfluss der Rückweg nicht eindeutig definiert ist. Auf welche Maske innerhalb des Maskenflusses navigiert wird, wird durch Navigationsbefehle in den Operationen festgelegt. Die Navigationsbefehle sind in der Controller-Konfigurationsdatei 120 enthalten und sind somit veränderbar. Dabei wird jedoch vorzugsweise nicht direkt angegeben, auf welche Maske navigiert werden soll, sondern nur welcher Weg von der aktuellen Maske zu wählen ist, durch den sich die Folgemaske implizit ergibt. Alle möglichen Wege müssen in der Controller-Konfigurationsdatei 120 *FormFlow.config* festgelegt sein. Durch diese Vorgehensweise ist es im Nachhinein möglich, Masken aus dem Maskenfluss zu entfernen (Ändern der Wege in der Konfiguration), ohne unbedingt die Operationen der Funktionseinheit anpassen zu müssen.

Die einzelnen Wege zu der nächsten Maske werden beispielsweise mit IDs (Zeichenketten) versehen. Die ID "next" wird dabei beispielsweise durch das Framework definiert und gibt den Standardweg beim Verlassen einer Maske an. Soll dieser Weg beschritten werden, so geschieht dies durch diesen Standard-Navigationsbefehl automatisch, ohne dass ein Befehl implementiert werden muss. Eine Implementierung ist daher nur erforderlich, wenn einer von mehreren Wegen beschritten werden soll.

Mittels Navigationsbefehle der Controller-Konfigurationsdatei 120 navigiert der Controller 100 zum nächsten oder vorherigen VGA-Workspace. Wenn der Controller mit Hilfe des Ablaufplans die nächste Maske ermittelt, legt er sie auf den Stapel. Bei einem umgekehrten Maskenwechsel in die Rückwärts-Richtung nimmt der Controller die oberste Maske vom Stapel. Ist also die erste Maske die aktuelle, liegen keine Masken auf dem Stapel.

Liegt ein nicht-linearer Maskenablauf vor, kann es Masken geben, die über mehrere alternative Nachfolgemasken verfügen. Die Klasse *VGAController* ist beispielsweise dafür zuständig, ausgehend von dem aktuellen VGA-Workspace den folgenden VGA-Workspace zu identifizieren, ihn zu erzeugen, zu initialisieren und anzuzeigen. Dabei wird bei jedem Maskenwechsel der Presenter vom Controller erzeugt, und diesem wird der aktuelle VGA-Workspace mit den zugehörigen Operationen übergeben.

Damit der Presenter Methoden des BusinessObjekts aufrufen kann, gibt der Controller die Referenz auf das BusinessObjekt an den Presenter weiter. Der aktuelle Status des Clients kann in Form eines technischen oder fachlichen Checkpoints weggeschrieben werden. Damit ein Vorgangsbearbeitungsmodul gesichert und wiederhergestellt werden kann, muss sichergestellt sein, dass alle Daten, die innerhalb des VGA von Belang sind, in einem Datenobjekt abgelegt sind. Dadurch ist gewährleistet, dass bei dem Wiederaufsatz auf einem bestimmten Checkpoint die Werte innerhalb der Datenobjekte wiederhergestellt werden. Dies wird durch die Unterstützung von Serialisierung erreicht. Unter einer Serialisierung versteht man eine sequentielle Abbildung von Objekten auf eine externe Darstellungsform. Ziel ist das Erreichen von Persistenz für das Objekt. Ein Objekt kann zum Beispiel serialisiert werden, indem der komplette Zustand des Objektes, inklusive aller Objekte die es referenziert, in einen Datenstrom umgewandelt und auf ein Speichermedium geschrieben wird. Der Zustand und Inhalt des Datencontainers kann so jederzeit in einen binären Datenstrom umgewandelt und persistiert werden. Somit können alle Daten eines VGA, die in einem Datenobjekt und damit im Datencontainer vorhanden sind, im Falle eines Systemabsturzes wiederhergestellt werden.

In der Fig. 2 ist die erfindungsgemäße Zuordnung von verschiedenen Maskenablaufplänen zu mehreren Vorgangsbearbeitungsmodulen dargestellt. Bei den Vorgangsbearbeitungsmodulen VGA1, VGA2, VGA3 und VGA4 handelt es sich vorzugsweise um Vorgangsbearbeitungsmodule entsprechend der Fig. 1 und der zugehörigen Beschreibung, da diese sich insbesondere zum Einsatz in einem stark modularen Gesamtsystem eignen. Ferner bringt die darin realisierte Trennung der Präsentationsschicht von der Funktionsschicht verschiedene Vorteile mit sich. Es können jedoch auch anders ausgestaltete Vorgangsbearbeitungsmodule eingesetzt werden.

Das erfindungsgemäße Verfahren zum rechnergestützten Erzeugen einer graphischen Benutzeroberfläche 10 auf einem Anzeigemittel 20 sieht vor, dass einem ersten Maskenablaufplan 51 aus wenigstens einem Maskenarbeitsbereich 53 ein erstes Vorgangsbearbeitungsmodul 61 zugeordnet wird und dass das Vorgangsbearbeitungsmodul wiederum einem ersten Anzeigemittel zugeordnet wird, das mit der Identifikation ID1 gekennzeichnet ist. Diese Zuordnung eines Vorgangsbearbeitungsmoduls zu einem Anzeigemittel mit einer eindeutigen Identifikation ist in der Fig. 2 durch ein damit verbundenes Feld mit der ID dargestellt. Ein zweiter Maskenablaufplan wird einem zweiten Vorgangsbearbeitungsmodul zugeordnet, was wiederum einem zweiten Anzeigemittel mit der Identifikation ID2 zugeordnet wird.

Die Zuordnung eines Maskenablaufplanes zu einem Vorgangsbearbeitungsmodul erfolgt über die Zuordnung einer Konfigurationsdatei, welche den Maskenablaufplan enthält, zu dem Vorgangsbearbeitungsmodul. Jedes VGA weist eine eigene Konfigurationsdatei auf, so dass für jedes Vorgangsbearbeitungsmodul ein spezifischer Maskenablaufplan erstellt und in einer Konfigurationsdatei hinterlegt werden kann. In dem in der Fig. 2 dargestellten Ausführungsbeispiel wird für zwei unterschiedliche Anzeigemittel jeweils ein Vorgangsbearbeitungsmodul mit einem spezifischen Maskenablaufplan erzeugt und einem Anwendungsprogramm bereitgestellt.

Die Maskenablaufpläne 51 und 52 unterscheiden sich durch die darin enthaltenen Einzelmasken und/oder die Navigation der Masken untereinander und sind an das zugeordnete Anzeigemittel angepasst. Handelt es sich bei dem ersten Anzeigemittel mit der Identifikation ID1 beispielsweise um einen Computerbildschirm, kann eine Vielzahl von detaillierten Steuerelementen 11 in den einzelnen Masken 53 enthalten sein, da eine große Fläche und eine große Auflösung zur Verfügung stehen. Ist der zweite Maskenablaufplan 52 einem Automatendisplay mit der Identifikation ID2 zugeordnet, welches typischerweise eine geringere Auflösung aufweist, sind die Steuerelemente entsprechend so ausgestaltet, dass sie auf dem Display gut darstellbar sind. Auch die Anzahl der Steuerelemente 11 innerhalb einer Maske kann verringert, und eine Maske, welche auf einem größeren Bildschirm durch eine einzige Maske darstellbar ist, kann auf zwei oder mehr Masken verteilt werden. So kann gewährleistet werden, dass für jedes Anzeigemittel innerhalb eines Retailsystems ein optimaler Maskenablaufplan vorliegt. Wird ein neuartiges Anzeigemittel in das System aufgenommen, wird ein weiteres Vorgangsbearbeitungsmodul erzeugt, welches mit einem spezifischen Maskenablaufplan aus einzelnen Masken versehen ist.

Die beiden Vorgangsbearbeitungsmodule 61 und 62 weisen die gleiche Funktionseinheit 80 auf, über welche der durch das Modul durchzuführende Vorgang abgebildet ist. Für einen Vorgang liegen somit mehrere Vorgangsbearbeitungsmodule vor, welche sich lediglich durch einen spezifischen Maskenablaufplan 51 oder 52 unterscheiden. Soll ein neuer Vorgang oder eine Transaktion in das Gesamtsystem aufgenommen werden, werden für den Vorgang so viele Vorgangsbearbeitungsmodule erzeugt, wie im System Anzeigemittel mit unterschiedlichen Anforderungen möglich sind. Jedes dieser neuen VGAs weist dieselbe Funktionseinheit 80, jedoch unterschiedliche Maskenablaufpläne auf.

In dem Ausführungsbeispiel der Fig. 2 steht das Anzeigemittel 20 in Verbindung mit einem Computermittel 40, auf welchem ein Anwendungsprogramm installiert ist. Das Anwendungsprogramm hat Zugriff auf die verschiedenen Vorgangsbearbeitungsmodule VGA1, VGA2, VGA3, VGA4, etc. und weist zur Interaktion mit einem Benutzer 30 eine graphische Benutzeroberfläche 10 auf. Das Anzeigemittel, auf welchem mit dem erfindungsgemäßen Verfahren eine graphische Benutzeroberfläche erzeugt werden soll, ist mit der Identifikation ID gekennzeichnet.

Beim Start des Anwendungsprogrammes auf dem Computermittel wird die Identifikation ID des damit verbundenen Anzeigemittels 20 eingelesen. Daraufhin erfolgt ein Vergleich der eingelesenen Identifikation ID mit den Identifikationen der Vorgangsbearbeitungsmodule und die Ermittlung der Vorgangsbearbeitungsmodule mit einem zugeordneten Anzeigemittel mit der Identifikation ID. Stimmt die eingelesene Identifikation ID beispielsweise mit der Identifikation ID1 überein, wird das Vorgangsbearbeitungsmodul 61 als aktivierbares Vorgangsbearbeitungsmodul des Anwendungsprogrammes festgelegt. Dies gilt ebenso für weitere Vorgangsbearbeitungsmodule mit anderen Funktionseinheiten und einem zugeordneten Anzeigemittel mit der Identifikation ID1. In der Fig. 2 ist dies beispielsweise das Modul VGA3, das ebenfalls für das Anzeigemittel 20 ausgelegt wäre.

Das Anwendungsprogramm verfügt auf dem Computermittel 40 Mittel zum Einlesen der Identifikation ID des angeschlossenen Anzeigemittels 20. Diese Identifikation kann auch als ArbeitsplatzTyp bezeichnet werden und wird beispielsweise aus der MSDE (Microsoft Database Engine) eines Microsoft-basierten Clients ausgelesen.

Die Festlegung eines VGA als aktivierbares Vorgangsbearbeitungsmodul kann beispielsweise dadurch erfolgen, dass ein Steuerelement für das betreffende Vorgangsbearbeitungsmodul auf der graphischen Benutzeroberfläche angezeigt wird und dass der Start des Moduls durch eine Betätigung des Steuerelementes durch einen Benutzer ausgelöst wird. So werden dem Benutzer auf der Benutzeroberfläche beispielsweise nur Schaltflächen zum Starten von VGAs angezeigt, welche für das jeweilige Anzeigemittel optimierte Masken enthalten. Vorgangsbearbeitungsmodule für andere Anzeigemittel sind nicht startbar.

In einem weiteren Ausführungsbeispiel der Erfindung kann ein Vorgangsbearbeitungsmodul beispielsweise durch das Einscannen eines Barcodes durch den Benutzer gestartet werden. In diesem Fall kann auf der Benutzeroberfläche alternativ ebenfalls ein entsprechendes Steuerelement vorliegen, oder das Vorgangsbearbeitungsmodul kann ausschließlich über einen Einscannvorgang gestartet werden. Kann ein VGA über das Einscannen eines Barcodes oder andere Aktionen am Client gestartet werden, wird zwischen dem auslösenden Vorgang und dem zugehörigen Vorgangsbearbeitungsmodul mit der Identifikation des Anzeigemittels eine Verbindung hergestellt, so dass die Aktion das VGA mit dem optimalen Maskenablaufplan startet.

In einem besonders bevorzugten Ausführungsbeispiel der Erfindung werden beim Start des Anwendungsprogrammes auf dem Computermittel 40 neben der Identifikation ID des Anzeigemittels 20 weitere Daten eingelesen und für eine Berechtigungsprüfung verwendet. Beispielsweise können ein Benutzertyp, ein Filialschlüssel, ein Filialtyp oder eine Client-ID eingelesen werden. Der Benutzertyp kann auch hierbei dazu genutzt werden, Benutzern mit unterschiedlichen Berechtigungen verschiedene Vorgangsbearbeitungsmodule zur Verfügung zu stellen. Ein Filialtyp kann beispielsweise genutzt werden, um an einem Filialarbeitsplatz in Abhängigkeit von den Eigenschaften der Filiale unterschiedliche Vorgangsbearbeitungsmodule zu aktivieren. Beispielsweise können in einer Filiale Vorgänge im Bereich der Finanzdienstleistungen angeboten werden, welche in anderen Filialen jedoch nicht verfügbar sein sollen. Da alle Filialen an das gleiche Gesamtsystem angeschlossen sind und die Vorgangsbearbeitungsmodule prinzipiell allen Filialen einheitlich bereitgestellt werden sollen, kann durch ein Einlesen des Filialtyps eine Aktivierung bestimmter VGAs erfolgen, während andere VGAs nicht verfügbar sind. Ändert sich das Berechtigungsprofil einer Filiale, kann dies einfach durch eine Veränderung des Filialtyps und eine entsprechende Zuordnung zu Vorgangsbearbeitungsmodulen realisiert werden.

Für den Start des Anwendungsprogrammes auf dem Client kann im Sinne der vorzugsweise stark modularen Struktur des Gesamtsystems ebenfalls ein eigenständiges Vorgangsbearbeitungsmodul bereitgestellt werden. Dieses Anmeldungs-Vorgangsbearbeitungsmodul hat in einem besonders bevorzugten Ausführungsbeispiel der Erfindung die Aufgabe, eine Sessions-Hierarchie aus einer Anwendungs-Session und einer Benutzer-Session anzulegen. Das Vorgangsbearbeitungsmodul füllt diese Session mit von ihr ermittelten Werten. Die Anwendungs-Session wird wenigstens mit der Identifikation des Anzeigemittels befüllt. Dieser ArbeitsplatzTyp wird beispielsweise aus der MSDE (Microsoft Database Engine) eines Microsoft-basierten Clients ausgelesen.

Die Anwendungs-Session kann ferner mit einer ClientID, einem FilialTyp, einem physikalischen Filialschlüssel und einem datenrelevanten Filialschlüssel befüllt werden. In einem besonders bevorzugten Ausführungsbeispiel der Erfindung werden diese Werte ebenfalls aus der MSDE ausgelesen. Der FilialTyp kann ferner aus einer Datenbankdatei ausgelesen werden. In der Benutzer-Session wird der Wert der *userRoles* angelegt, der vorzugsweise als Zeichenkette aus der Controller-Konfigurationsdatei des VGA eingelesen wird.

Das Anmeldungs-Vorgangsbearbeitungsmodul beinhaltet mehrere Klassen, welche zur Durchführung der Anmeldung verschiedene Funktionen übernehmen. Beispielsweise wird eine Dataservice-Klasse bereitgestellt, welche unter Verwendung von Datenaktionen den ArbeitsplatzTyp, die ClientID, den Filialschlüssel und den Filialtyp ermittelt. Die Klasse wird vorzugsweise nur von der Funktionseinheit des VGA genutzt. Eine weitere Logon-Klasse verarbeitet den Logon-Command, der vom Maskenarbeitsbereich ausgelöst wird. Die Methode *Logon* () führt dabei alle Tätigkeiten aus, die im Rahmen der Anmeldung stattfinden. Die Anwendungs-Session und die Benutzer-Session werden beispielsweise mittels eines SessionCreatorPlug-Ins angelegt. Das SessionCreatorPlug-In erzeugt eine SessionID und erstellt die jeweilige Session. Nach Befüllung der Sessions mit den genannten Werten beendet sich das Anmeldungs-Vorgangsbearbeitungsmodul und startet vorzugsweise ein Nachfolgemodul. Der Schlüssel des Nachfolgemoduls wird aus der Konfigurationsdatei des Anmeldungs-Vorgangsbearbeitungsmoduls ausgelesen.

### Bezugszeichenliste:

- 10: Graphische Benutzeroberfläche, GUI
- 11: Steuerelement
- 20: Anzeigemittel, Monitor, Display
- 30: Benutzer, Anwender
- 40: Computermittel
- 50: Maskenablaufplan
- 51: Erster Maskenablaufplan
- 52: Zweiter Maskenablaufplan
- 53: Maskenarbeitsbereich
- 60: Vorgangsbearbeitungsmodul
- 61: Erstes Vorgangsbearbeitungsmodul
- 62: Zweites Vorgangsbearbeitungsmodul
- 70: Startmodul
- 80: Funktionseinheit
- 90: Datencontainer
- 100: Controller
- 110: Datencontainer-Konfigurationsdatei
- 120: Controller-Konfigurationsdatei
- 130: Darstellungskomponente, Presenter

## Patentansprüche

1. Verfahren zum rechnergestützten Erzeugen einer graphischen Benutzeroberfläche (10) auf einem Anzeigemittel (20), wobei die Benutzeroberfläche (10) zur Interaktion eines Benutzers (30) mit einem Anwendungsprogramm dient und das Anwendungsprogramm auf einem Computermittel (40) installiert ist, das in Verbindung mit dem Anzeigemittel (20) steht, wobei das Anwendungsprogramm Zugriff auf mehrere Vorgangsbearbeitungsmodule (60, 61, 62) hat und ein Vorgangsbearbeitungsmodul (60, 61, 62) innerhalb des Anwendungsprogramms jeweils einen Vorgang eines Retailsystems abwickelt, und die Benutzeroberfläche (10) ferner als Assistenten-basiertes System konzipiert ist, bei dem von einem Benutzer (30) im Laufe eines Vorgangs mehrere Maskenarbeitsbereiche (53) in einer vorgegebenen Reihenfolge, die durch einen Maskenablaufplan (50, 51, 52) definiert wird, abgearbeitet werden,
**gekennzeichnet durch**
folgende Schritte:
- Zuordnen eines ersten Maskenablaufplanes (51) aus wenigstens einem Maskenarbeitsbereich (53) zu einem ersten Vorgangsbearbeitungsmodul (61), Hinterlegen des ersten Maskenablaufplanes (51) in einer ersten Controller-Konfigurationsdatei, wobei alle möglichen Wege in der Controller-Konfigurationsdatei festgelegt sein müssen, und Zuordnen dieses ersten Vorgangsbearbeitungsmoduls (61) zu einem ersten Anzeigemittel, wobei das erste Anzeigemittel mit einer ersten Identifikation ID1 **gekennzeichnet** ist und das erste Vorgangsbearbeitungsmodul (61) wenigstens mit einer Funktionseinheit (80) versehen wird, wobei die Funktionseinheit (80) die fachliche Funktionalität des ersten Vorgangsbearbeitungsmoduls (61) zur Durchführung eines Vorgangs innerhalb eines Retailsystems bereitstellt;
- Zuordnen eines zweiten Maskenablaufplanes (52) aus wenigstens einem Maskenarbeitsbereich (53) zu einem zweiten Vorgangsbearbeitungsmodul (62), Hinterlegen des zweiten Maskenablaufplanes (52) in einer zweiten Controller-Konfigurationsdatei, wobei alle möglichen Wege in der Controller-Konfigurationsdatei festgelegt sein müssen, und Zuordnen dieses zweiten Vorgangsbearbeitungsmoduls (62) zu einem zweiten Anzeigemittel, wobei das zweite Anzeigemittel mit einer zweiten Identifikation ID2 **gekennzeichnet** ist und das zweite Vorgangsbearbeitungsmodul (62) wenigstens mit einer Funktionseinheit (80) versehen wird, wobei die Funktionseinheit (80) die fachliche Funktionalität des zweiten vorgangsbearbeitungsmoduls (62) zur Durchführung eines Vorgangs innerhalb eines Retailsystems bereitstellt;
- Versehen des ersten Vorgangsbearbeitungsmoduls (61) und des zweiten Vorgangsbearbeitungsmoduls (62) mit einer identischen Funktionseinheit (80), so dass beide vorgangsbearbeitungsmodule (61;62) in dem Anwendungsprogramm den gleichen Vorgang durchführen;
- Starten des Anwendungsprogramms auf dem Computermittel (40), wobei die Identifikation ID des damit verbundenen Anzeigemittels (20) eingelesen wird;
- Vergleich der Identifikation ID des Anzeigemittels (20) mit den Identifikationen ID1 und ID2 der Vorgangsbearbeitungsmodule (61;62) und Ermittlung des Vorgangsbearbeitungsmoduls mit einem zugeordneten Anzeigemittel mit der Identifikation ID;
- Festlegung des Vorgangsbearbeitungsmoduls mit einem zugeordneten Anzeigemittel mit der Identifikation ID als aktivierbares Vorgangsbearbeitungsmodul des Anwendungsprogramms;
- Einlesen der zu dem aktivierbaren Vorgangsbearbeitungsmodul gehörenden Controller-Konfigurationsdatei (120) beim Start des betreffenden Vorgangsbearbeitungsmoduls;
- Einlesen des Maskenablaufplanes aus der Controller-Konfigurationsdatei (120) des aktivierbaren Vorgangsbearbeitungsmoduls und Darstellen des zugeordneten Maskenarbeitsbereiches auf der graphischen Benutzeroberfläche beim Start des Vorgangabearbeitungsmoduls.

2. Verfahren nach Anspruch 1,
**dadurch gekenntzeichnet,**
**dass** beim Starten eines aktivierbaren vorgangsbearbeitungsmoduls (60) folgende Schritte ablaufen:
- Starten des Vorgangsbearbeitungsmoduls (60) durch ein Startmodul (70), wobei beim Starten wenigstens ein Controller (100), eine Funktionseinheit (80) und ein Datencontainer (90) des Vorgangsbearbeitungsmoduls (60) initialisiert werden;
- Einlesen der Controller-Konfigurationsdatei (120) des Vorgangsbearbeitungsmoduls (60) zur Initialisierung des Controllers (100), wobei die Controller-Konfigurationsdatei (120) wenigstens die Konfiguration der Darstellung des Maskenarbeitsbereiches (53) des betreffenden Vorgangsbearbeitungsmoduls (60) beinhaltet;
- Einlesen einer Datencontainer-Konfigurationsdatei (110) des vorgangsbearbeitungsmoduls (60) zur Initialisierung des Datencontainers (90), wobei die Datencontainer-Konfigurationsdatei (110) die Konfiguration der Datenobjekte des Datencontainers (90) des betreffenden Vorgangsbearbeitungsmoduls (60) und die Konfiguration der Operationen für die Kommunikation zwischen dem Maskenarbeitsbereich (53), der Funktionseinheit (80) und dem Datencontainer (90) beinhaltet;
- Initialisieren einer Darstellungskomponente (130) durch den Controller (100), wobei die Darstellungskomponente (130) eine Verbindung zwischen dem wenigstens einen Maskenarbeitsbereich (53) und dem Datencontainer (90) herstellt;
- Ermitteln und Initialisieren des ersten Maskenarbeitsbereiches (53) eines Maskenablaufplanes (50) des Vorgangsbearbeitungsmoduls (60) durch den Controller (100);
- Initialisieren und Darstellen der Steuerelemente (11) des Maskenarbeitsbereiches (53) auf der graphischen Benutzeroberfläche (10), wobei der Maskenarbeitsbereich (53) über die Darstellungskomponente (130) auf die Datenobjekte des Datencontainers (90) zugreift.

3. Verfahren nach einem oder beiden der Ansprüche 1 und 2,
**dadurch gekennzeichnet,**
**dass** bei der Festlegung des Vorgangsbearbeitungsmoduls mit einem zugeordneten Anzeigemittel mit der Identifikation ID als aktivierbares Vorgangsbearbeitungsmodul des Anwendungsprogramms ein Steuerelement (11) für das betreffende Vorgangsbearbeitungsmodul auf der graphischen Benutzeroberfläche (10) angezeigt wird und der Start des Vorgangsbearbeitungsmoduls durch eine Betätigung des Steuerelementes (11) durch einen Benutzer (30) ausgelöst wird.

4. Verfahren nach einem oder mehreren der Ansprüche 1 bis 3,
**dadurch gekennzeichnet,**
**dass** die Controller-Konfigurationsdatei (120) und/oder die Datencontainer-Konfigurationsdatei (110) im XML-Format bereitgestellt werden.

5. Verfahren nach einem oder mehreren der Ansprüche 1 bis 4,
**dadurch gekennzeichnet,**
**dass** das Anwendungsprogramm auf einem Client betrieben und die Identifikation ID des Anzeigemittels (20) aus einer Datenquelle des Clients ausgelesen wird, wobei es sich bei der Datenquelle um eine Datenbank und/oder eine Datei handeln kann.

6. Vorrichtung zum rechnergestützten Erzeugen einer graphischen Benutzeroberfläche (10) auf einem Anzeigemittel (20), wobei die Benutzeroberfläche zur Interaktion eines Benutzers (30) mit einem Anwendungsprogramm dient und das Anwendungsprogramm auf einem Computermittel (40) installiert ist, das in Verbindung mit dem Anzeigemittel (20) steht und das Anwendungsprogramm Zugriff auf wenigstens ein Vorgangsbearbeitungsmodul (60) hat und ein Vorgangsbearbeitungsmodul innerhalb des Anwendungsprogramms jeweils zur Abwicklung eines Vorgangs eines Retailsystems ausgebildet ist, und die Benutzeroberfläche ferner als Assistenten-basiertes System konzipiert ist, bei dem von einem Benutzer (30) im Laufe eines Vorgangs mehrere Maskenarbeitabereiche in einer vorgegebenen Reihenfolge, die durch einen Maskenablaufplan (51;52) definiert wird, abgearbeitet werden können,
**gekennzeichnet durch**
folgende Merkmale:
- Mittel zum Zuordnen eines ersten Maskenablaufplanes (51) zu einem ersten Vorgangsbearbeitungsmodul (61) und zu einem ersten Anzeigemittel mit einer Identifikation ID1 und Mittel zur Hinterlegung des ersten Maskenablaufplanes in einer ersten Controller-Konfigurationsdatei, wobei alle möglichen Wege in der Controller-Konfigurationsdatei festgelegt sein müssen und wobei das erste Vorgangsbearbeitungsmodul (61) eine Funktionseinheit (80) umfasst, welche die fachliche Funktionalität des ersten Vorgangsbearbeitungsmoduls (61) zur Durchführung eines Vorgangs innerhalb eines Retailsystems bereitstellt;
- Mittel zum Zuordnen eines zweiten Maskenablaufplanes (52) zu einem zweiten Vorgangsbearbeitungsmodul (62) und zu einem zweiten Anzeigemittel mit einer Identifikation ID2 und Mittel zur Hinterlegung des zweiten Maskenablaufplanes (52) in einer zweiten Controller-Konfigurationsdatei, wobei alle möglichen Wege in der Controller-Konfigurationsdatei festgelegt sein müssen und wobei das zweite Vorgangsbearbeitungsmodul (62) eine Funktionseinheit (80) umfasst, welche die fachliche Funktionalität des zweiten Vorgangsbearbeitungsmoduls (62) zur Durchführung eines Vorgangs innerhalb eines Retailsystems bereitstellt;
- wobei ein Maskenarbeitsbereich Steuerelemente (11) umfasst, denen jeweils ein Datenobjekt zugeordnet ist, und das erste Vorgangsbearbeitungsmodul (61) und das zweite vorgangsbearbeitungsmodul (62) mit einer identischen Funktionseinheit (80) versehen sind, so dass mit beiden Vorgangsbearbeitungsmodulen (61;62) in dem Anwendungsprogramm der gleiche Vorgang durchführbar ist;
- Mittel zum Einlesen einer Identifikation ID des Anzeigemittels (20) in Verbindung mit dem Computermittel (40), auf welchem das Anwendungsprogramm gestartet wird;
- Mittel zum Vergleich der eingelesenen Identifikation ID des Anzeigemittel (20) mit den Identifikationen ID1 und ID2 der Vorgangsbearbeitungsmodule (61;62);
- Mittel zur Festlegung des Vorgangsbearbeitungsmoduls (61;62) mit einem zugeordneten Anzeigemittel mit der Identifikation ID als aktivierbares Vorgangsbearbeitungsmodul des Anwendungsprogramms;
- Mittel zum Einlesen des Maskenablaufplanes eines aktivierbaren Vorgangsbearbeitungsmoduls und zur Darstellung der zugeordneten Maskenarbeitsbereiche auf der graphischen Benutzeroberfläche.

7. Vorrichtung nach Anspruch 6,
**gekennzeichnet durch**
folgende Merkmale:
- Vorgangsbearbeitungsmodul (60), umfassend wenigstens
• einen Maskenarbeitsbereich (53)
• einen Controller (100)
• einen Datencontainer (90) und
• eine Funktionseinheit (80);
- Startmodul (70) zum Starten des Vorgangsbearbeitungsmoduls (60), wobei das Startmodul (70) Mittel zum Initialisieren wenigstens des Controllers (100), der Funktionseinheit (80) und des Datencontainers (90) aufweist;
- Mittel zum Einlesen einer Datencontainer-Konfigurationsdatei (110) zur Initialisierung des Datencontainers (90), wobei die Datencontainer-Konfigurationsdatei (110) die Konfiguration der Datenobjekte des Datencontainers (90) des betreffenden Vorgangsbearbeitungsmoduls (60) und die Konfiguration der Operationen für die Kommunikation zwischen dem Maskenarbeitsbereich (53), der Funktionseinheit (80) und dem Datencontainer (90) beinhaltet;
- Controller (100) umfassend wenigstens
• Mittel zum Einlesen einer Controller-Konfigurationsdatei (120) zur Initialisierung des Controllers (100), wobei die Controller-Konfigurationsdatei (120) wenigstens einen Maskenablaufplan (50) enthält und der Maskenablaufplan (50) wenigstens einen Maskenarbeitsbereich (53) beinhaltet,
• Mittel zum Initialisieren der Darstellungskomponente (130),
• Mittel zum Ermitteln und Initialisieren des ersten Maskenarbeitsbereiches (53) des Maskenablaufplanes (50) des Vorgangsbearbeitungsmoduls (60);
- Maskenarbeitsbereich (53) umfassend wenigstens
• Mittel zum Initialisieren und Darstellen der Steuerelemente (11) des Maskenarbeitsbereiches (53) auf der graphischen Benutzeroberfläche (10),
• Mittel zum Zugreifen auf Datenobjekte des Datencontainers (90) über die Darstellungskomponente (130).

8. Computerlesbares Medium, das Befehle zum Ausführen der Schritte des Verfahrens 1 auf einem Computermittel aufweist.

## Claims

1. A method for the computer-assisted generation of a graphic user interface (10) on a display means (20), whereby the user interface (10) serves for the interaction of a user (30) with an application program, and the application program is installed on a computing means (40) that is in communication with the display means (20), whereby the application program has access to several transaction processing modules (60, 61, 62), and a transaction processing module (60, 61, 62) within the application program processes a transaction of a retail system, and the user interface (10) is designed as an assistant-based system in which, over the course of a transaction, a user (30) processes several mask working areas (53) in a prescribed order that is defined by a mask sequence plan (50, 51, 52),
**characterized by**
the following steps:
- associating a first mask sequence plan (51) consisting of at least one mask working area (53) with a first transaction processing module (61), storing the first mask sequence plan (51) in a first controller configuration file, whereby all possible paths have to be specified in the controller configuration file, and associating this first transaction processing module (61) with a first display means, whereby the first display means is **characterized by** a first identification ID1 and the first transaction processing module (61) is provided with at least one function unit (80), whereby the function unit (80) provides the professional functionality of the first transaction processing module (61) for executing a transaction within a retail system;
- associating a second mask sequence plan (52) consisting of at least one mask working area (53) with a second transaction processing module (62), storing the second mask sequence plan (52) in a second controller configuration file, whereby all possible paths have to be specified in the controller configuration file, and associating this second transaction processing module (62) with a second display means, whereby the second display means is **characterized by** a second identification ID2 and the second transaction processing module (62) is provided with at least one function unit (80), whereby the function unit (80) provides the professional functionality of the second transaction processing module (62) for executing a transaction within a retail system;
- providing the first transaction processing module (61) and the second transaction processing module (62) with an identical function unit (80), so that both transaction processing modules (61; 62) carry out the same transaction in the application program;
- starting the application program on the computing means (40), whereby the identification ID of the display means (20) associated with it is read in;
- comparing the identification ID of the display means (20) to the identifications ID1 and ID2 of the transaction processing modules (61; 62), and determining the transaction processing module that has an associated display means having the identification ID;
- specifying the transaction processing module that has an associated display means having the identification ID as an activatable transaction processing module of the application program;
- reading in the controller configuration file (120) belonging to the activatable transaction processing module at the start of the appertaining transaction processing module;
- reading in the mask sequence plan from the controller configuration file (120) of the activatable transaction processing module and depicting the associated mask working area on the graphic user interface at the start of the transaction processing module.

2. The method according to Claim 1,
**characterized in that**,
when an activatable transaction processing module (60) is started, the following steps take place:
- starting the transaction processing module (60) by a starting module (70), whereby during the start, at least one controller (100), one function unit (80) and one data container (90) of the transaction processing module (60) are initialized;
- reading in the controller configuration file (120) of the transaction processing module (60) in order to initialize the controller (100), whereby the controller configuration file (120) contains at least the configuration of the depiction of the mask working area (53) of the appertaining transaction processing module (60);
- reading in a data container configuration file (110) of the transaction processing module (60) in order to initialize the data container (90), whereby the data container configuration file (110) contains the configuration of the data objects of the data container (90) of the appertaining transaction processing module (60) and the configuration of the operations for the communication between the mask working area (53), the function unit (80) and the data container (90);
- initializing a depiction component (130) by the controller (100), whereby the depiction component (130) establishes a connection between the at least one mask working area (53) and the data container (90);
- determining and initializing the first mask working area (53) of a mask sequence plan (50) of the transaction processing module (60) by the controller (100);
- initializing and depicting the control elements (11) of the mask working area (53) on the graphic user interface (10), whereby the mask working area (53) accesses the data objects of the data container (90) via the depiction component (130).

3. The method according to one or both of Claims 1 and 2,
**characterized in that**,
when the transaction processing module that has an associated display means having the identification ID is specified as the activatable transaction processing module of the application program, a control element (11) for the appertaining transaction processing module is displayed on the graphic user interface (10) and the start of the transaction processing module is triggered when a user (30) actuates the control element (11).

4. The method according to one or more of Claims 1 to 3,
**characterized in that**
the controller configuration file (120) and/or the data container configuration file (110) are provided in XML format.

5. The method according to one or more of Claims 1 to 4,
**characterized in that**
the application program is operated on a client and the identification ID of the display means (20) is read out of a data source of the client, whereby the data source can be a database and/or a file.

6. A device for the computer-assisted generation of a graphic user interface (10) on a display means (20), whereby the user interface serves for the interaction of a user (30) with an application program, and the application program is installed on a computing means (40) that is in communication with the display means (20), and the application program has access to at least one transaction processing module (60), and a transaction processing module within the application program is configured to handle a transaction of a retail system, and the user interface is also designed as an assistant-based system in which, over the course of a transaction, a user (30) can process several mask working areas in a prescribed order that is defined by a mask sequence plan (51; 52),
**characterized by**
the following features:
- means for associating a first mask sequence plan (51) with a first mask sequence plan (51) and with a first display means having an identification ID1, and means for storing the first mask sequence plan in a first controller configuration file, whereby all possible paths have to be specified in the controller configuration file, and whereby the first transaction processing module (61) comprises a function unit (80) that provides the professional functionality of the first transaction processing module (61) for executing a transaction within a retail system;
- means for associating a second mask sequence plan (52) with a second transaction processing module (62) and with a second display means having an identification ID2 and means for storing the second mask sequence plan (52) in a second controller configuration file, whereby all possible paths have to be specified in the controller configuration file, and whereby the second transaction processing module (62) comprises a function unit (80) that provides the professional functionality of the second transaction processing module (62) for executing a transaction within a retail system;
- whereby a mask working area comprises control elements (11) with each of which a data object (41) is associated, and the first transaction processing module (61) and the second transaction processing module (62) are provided with an identical function unit (80), so that the same transaction can be carried out with both transaction processing modules (61; 62) in the application program;
- means for reading in an identification ID of the display means (20) that is in communication with the computing means (40) on which the application program is started;
- means for comparing the read-in identification ID of the display means (20) to the identifications ID1 and ID2 of the transaction processing modules (61; 62);
- means for specifying the transaction processing module (61; 62) that has an associated display means having the identification ID as an activatable transaction processing module of the application program;
- means for reading in the mask sequence plan of the activatable transaction processing module and for depicting the associated mask working areas on the graphic user interface.

7. The device according to Claim 6,
**characterized by**
the following features:
- a transaction processing module (60), comprising at least
• one mask working area (53),
• one controller (100),
• one data container (90) and
• one function unit (80);
- a starting module (70) for starting the transaction processing module (60), whereby the starting module (70) has means for initializing at least the controller (100), the function unit (80) and the data container (90);
- means for reading in a data container configuration file (110) for initializing the data container (90), whereby the data container configuration file (110) contains the configuration of the data objects of the data container (90) of the appertaining transaction processing module (60) and the configuration of the operations for the communication between the mask working area (53), the function unit (80) and the data container (90);
- a controller (100) comprising at least
• means for reading in a controller configuration file (120) for initializing the controller (100), whereby the controller configuration file (120) contains at least one mask sequence plan (50), and the mask sequence plan (50) contains at least one mask working area (53),
• means for initializing the depiction component (130),
• means for determining and initializing the first mask working area (53) of a mask sequence plan (50) of the transaction processing module (60);
- a mask working area (53) comprising at least
• means for initializing and depicting the control elements (11) of the mask working area (53) on the graphic user interface (10),
• means for accessing data objects of the data container (90) via the depiction component (130).

8. A computer-readable medium that comprises commands for the execution of the steps of the method 1 on a computing means.

## Revendications

1. Procédé pour créer, de manière assistée par ordinateur, une interface utilisateur graphique (10) sur un moyen d'affichage (20), l'interface utilisateur (10) servant à l'interaction entre un utilisateur (30) et un programme d'application et le programme d'application étant installé sur un moyen informatique (40) qui est relié au moyen d'affichage (20), le programme d'application ayant accès à plusieurs modules de traitement d'opérations (60, 61, 62) et un module de traitement d'opérations (60, 61,62) exécutant au sein du programme d'application respectivement une opération d'un système de vente au détail et l'interface utilisateur (10) étant en outre conçue comme système basé sur un assistant dans lequel un utilisateur (30) traite, au cours d'une opération, plusieurs zones de masque opérationnelles (53) dans un ordre prédéterminé qui est défini par un plan de déroulement de masques (50, 51, 52), **caractérisé par** les étapes suivantes :
- affecter un premier plan de déroulement de masques (51) d'au moins une zone de masque opérationnelle (53) à un premier module de traitement d'opérations (61), déposer le premier plan de déroulement de masques (51) dans un premier fichier de configuration de contrôleur, tous les chemins possibles devant être déterminés dans le fichier de configuration de contrôleur, et affecter ce premier module de traitement d'opérations (61) à un premier moyen d'affichage, le premier moyen d'affichage étant identifié par une première identification ID1 et le premier module de traitement d'opérations (61) étant pourvu d'au moins une unité fonctionnelle (80), l'unité fonctionnelle (80) mettant à disposition la fonctionnalité professionnelle du premier module de traitement d'opérations (61) pour l'exécution d'une opération dans un système de vente au détail ;
- affecter un deuxième plan de déroulement de masques (52) d'au moins une zone de masque opérationnelle (53) à un deuxième module de traitement d'opérations (62), déposer le deuxième plan de déroulement de masques (52) dans un deuxième fichier de configuration de contrôleur, tous les chemins possibles devant être déterminés dans le fichier de configuration de contrôleur, et affecter ce deuxième module de traitement d'opérations (62) à un deuxième moyen d'affichage, le deuxième moyen d'affichage étant identifié par une deuxième identification ID2 et le deuxième module de traitement d'opérations (62) étant pourvu d'au moins une unité fonctionnelle (80), l'unité fonctionnelle (80) mettant à disposition la fonctionnalité professionnelle du deuxième module de traitement d'opérations (62) pour l'exécution d'une opération dans un système de vente au détail ;
- pourvoir le premier module de traitement d'opérations (61) et le deuxième module de traitement d'opérations (62) d'une unité fonctionnelle (80) identique de sorte que les deux modules de traitement d'opérations (61 ; 62) exécutent la même opération dans le programme d'application :
- lancer le programme d'application sur le moyen informatique (40), l'identification ID du moyen d'affichage (20) qui y est relié étant lue ;
- comparer l'identification ID du moyen d'affichage (20) avec les identifications ID1 et ID2 des modules de traitement d'opérations (61 ; 62) et déterminer le module de traitement d'opérations avec un moyen d'affichage associé avec l'identification ID ;
- déterminer le module de traitement d'opérations avec un moyen d'affichage associé avec l'identification ID comme module de traitement d'opérations activable du programme d'application ;
- lire le fichier de configuration de contrôleur (120) faisant partie du module activable de traitement d'opérations au démarrage du module de traitement d'opérations concerné ;
- lire le plan de déroulement de masques à partir du fichier de configuration de contrôleur (120) du module activable de traitement d'opérations et représenter la zone de masque opérationnelle associée sur l'interface utilisateur graphique au démarrage du module de traitement d'opérations.

2. Procédé selon la revendication 1, **caractérisé en ce que** les étapes suivantes se déroulent au démarrage d'un module activable de traitement d'opérations (60) :
- démarrage du module de traitement d'opérations (60) par un module de démarrage (70), au moins un contrôleur (100), une unité fonctionnelle (80) et un conteneur de données (90) du module de traitement d'opérations (60) étant initialisés au démarrage ;
- lecture du fichier de configuration de contrôleur (120) du module de traitement d'opérations (60) pour initialiser le contrôleur (100), le fichier de configuration du contrôleur (120) contenant au moins la configuration de la représentation de la zone de masque opérationnelle (53) du module de traitement d'opérations concerné (60) ;
- lecture d'un fichier de configuration de conteneur de données (110) du module de traitement d'opérations (60) pour initialiser le contrôleur de données (90), le fichier de configuration de conteneur de données (110) contenant la configuration des objets de données du conteneur de données (90) du module de traitement d'opérations concerné (60) et la configuration des opérations pour la communication entre la zone de masque opérationnelle (53), l'unité fonctionnelle (80) et le conteneur de données (90) ;
- initialisation d'une composante de représentation (130) par le contrôleur (100), la composante de représentation (130) établissant une liaison entre l'au moins une zone de masque opérationnelle (53) et le conteneur de données (90) ;
- détermination et initialisation, par le contrôleur (100), de la première zone de masque opérationnelle (53) d'un plan de déroulement de masques (50) du module de traitement d'opérations (60) ;
- initialisation et représentation des éléments de commande (11) de la zone de masque opérationnelle (53) au niveau de l'interface utilisateur graphique (10), la zone de masque opérationnelle (53) accédant aux objets de données du conteneur de données (90) via la composante de représentation (130).

3. Procédé selon l'une ou les deux revendications 1 et 2, **caractérisé en ce que**, à la détermination du module de traitement d'opérations avec un moyen d'affichage associé comme module de traitement d'opérations activable du programme d'application grâce à l'identification ID, un élément de commande (11) pour le module de traitement d'opérations concerné est affiché au niveau de 1 interface utilisateur graphique (10) et le démarrage du module de traitement d'opérations est déclenché par actionnement de l'élément de commande (11) par un utilisateur (30).

4. Procédé selon l'une ou plusieurs des revendications 1 à 3, **caractérisé en ce que** le fichier de configuration de contrôleur (120) et/ou le fichier de configuration de conteneur de données (110) sont mis à disposition au format XML.

5. Procédé selon l'une ou plusieurs des revendications 1 à 4, **caractérisé en ce que** le programme d'application est exploité sur un client et l'identification ID du moyen d'affichage (20) est lue à partir d'une source de données du client, la source de données pouvant être une base de données et/ou un fichier.

6. Dispositif pour créer, de manière assistée par ordinateur, une interface utilisateur graphique (10) sur un moyen d'affichage (20), l'interface utilisateur servant à l'interaction entre un utilisateur (30) et un programme d'application et le programme d'application étant installé sur un moyen informatique (40) qui est relié au moyen d'affichage (20), le programme d'application ayant accès à au moins un module de traitement d'opérations (60) et un module de traitement d'opérations étant réalisé pour exécuter au sein du programme d'application respectivement une opération d'un système de vente au détail, et l'interface utilisateur étant en outre conçue comme système basé sur un assistant dans lequel un utilisateur (30) peut traiter, au cours d'une opération, plusieurs zones de masque opérationnelles dans un ordre prédéterminé qui est défini par un plan de déroulement de masques (51, 52), **caractérisé par** les caractéristiques suivantes :
- un moyen pour affecter un premier plan de déroulement de masques (51) à un premier module de traitement d'opérations (61) et à un premier moyen d'affichage avec une identification ID1 et un moyen pour déposer le premier plan de déroulement de masques dans un premier fichier de configuration de contrôleur, tous les chemins possibles devant être déterminés dans le fichier de configuration de contrôleur et le premier module de traitement d'opérations (61) comprenant une unité fonctionnelle (80) qui met à disposition la fonctionnalité professionnelle du premier module de traitement d'opérations (61) pour l'exécution d'une opération dans un système de vente au détail ;
- un moyen pour affecter un deuxième plan de déroulement de masques (52) à un deuxième module de traitement d'opérations (62) et à un deuxième moyen d'affichage avec une identification ID2 et un moyen pour déposer le deuxième plan de déroulement de masques (52) dans un deuxième fichier de configuration de contrôleur, tous les chemins possibles devant être déterminés dans le fichier de configuration de contrôleur et le deuxième module de traitement d'opérations (62) comprenant une unité fonctionnelle (80) qui met à disposition la fonctionnalité professionnelle du deuxième module de traitement d'opérations (62) pour l'exécution d'une opération dans un système de vente au détail ;
- une zone de masque opérationnelle comprenant des éléments de commande (11) auxquels est respectivement associé un objet de données et le premier module de traitement d'opérations (61) et le deuxième module de traitement d'opérations (62) étant pourvus d'une unité fonctionnelle (80) identique de sorte que les deux modules de traitement d'opérations (61 ; 62) permettent l'exécution de la même opération dans le programme d'application ;
- un moyen pour lire une identification ID du moyen d'affichage (20) en liaison avec le moyen informatique (40) sur lequel le programme d'application est lancé ;
- un moyen pour comparer l'identification ID lue du moyen d'affichage (20) avec les identifications ID1 et ID2 des modules de traitement d'opérations (61 ; 62) ;
- un moyen pour déterminer le module de traitement d'opérations (61 ; 62) avec un moyen d'affichage associé avec l'identification ID comme module de traitement d'opérations activable du programme d'application ;
- un moyen pour lire le plan de déroulement de masques d'un module activable de traitement d'opérations et pour représenter les zones de masque opérationnelles associées au niveau de l'interface utilisateur graphique.

7. Dispositif selon la revendication 6, **caractérisé par** les caractéristiques suivantes :
- un module de traitement d'opérations (60) comprenant au moins
■ une zone de masque opérationnelle (53),
■ un contrôleur (100),
■ un conteneur de données (90) et
■ une unité fonctionnelle (80) ;
- un module de démarrage (70) pour démarrer le module de traitement d'opérations (60), le module de démarrage (70) comportant des moyens pour initialiser au moins le contrôleur (100), l'unité fonctionnelle (80) et le conteneur de données (90) ;
- un moyen pour lire un fichier de configuration de conteneur de données (110) pour initialiser le conteneur de données (90), le fichier de configuration de conteneur de données (110) contenant la configuration des objets de données du conteneur de données (90) du module de traitement d'opérations concerné (60) et la configuration des opérations pour la communication entre la zone de masque opérationnelle (53), l'unité fonctionnelle (80) et le conteneur de données (90) ;
- un contrôleur (100), comprenant au moins
■ un moyen pour lire un fichier de configuration de contrôleur (120) pour initialiser le contrôleur (100), le fichier de configuration de contrôleur (120) contenant au moins un plan de déroulement de masques (50) et le plan de déroulement de masques (50) contenant au moins une zone de masque opérationnelle (53),
■ un moyen pour initialiser la composante de représentation (130),
■ un moyen pour déterminer et initialiser la première zone de masque opérationnelle (53) du plan de déroulement de masques (50) du module de traitement d'opérations (60) ;
- une zone de masque opérationnelle (53) comprenant au moins
■ un moyen pour initialiser et représenter les éléments de commande (11) de la zone de masque opérationnelle (63) au niveau de l' interface utilisateur graphique (10),
■ un moyen pour accéder à des objets de données du conteneur de données (90) via la composante de représentation (130).

8. Support lisible par ordinateur, lequel comporte des ordres pour exécuter sur un moyen informatique les étapes du procédé 1.
